(19) Europäisches Patentamt
European Patent Office
Office européen des brevets

(11) EP 4 593 322 A1

(12) EUROPEAN PATENT APPLICATION
published in accordance with Art. 153(4) EPC

(43) Date of publication:
30.07.2025 Bulletin 2025/31

(51) International Patent Classification (IPC):
H04L 9/08 (2006.01)       H04L 41/00 (2022.01)
H04W 12/00 (2021.01)

(21) Application number: 22959157.3

(22) Date of filing: 22.09.2022

(52) Cooperative Patent Classification (CPC):
H04L 9/08; H04L 41/00; H04W 12/00

(86) International application number:
PCT/CN2022/120646

(87) International publication number:
WO 2024/060149 (28.03.2024 Gazette 2024/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: GUANGDONG OPPO MOBILE
TELECOMMUNICATIONS
CORP., LTD.
Dongguan, Guangdong 523860 (CN)

(72) Inventors:
• GAN, Lu
  Dongguan, Guangdong 523860 (CN)

• LIU, Xuefeng
  Dongguan, Guangdong 523860 (CN)
• ZOU, Jipeng
  Dongguan, Guangdong 523860 (CN)
• SHI, Cong
  Dongguan, Guangdong 523860 (CN)
• YANG, Ning
  Dongguan, Guangdong 523860 (CN)

(74) Representative: RGTH
Patentanwälte PartGmbB
Neuer Wall 10
20354 Hamburg (DE)

(54) KEY VERIFICATION METHODS, KEY ACQUISITION METHOD, AND DEVICES

(57) Provided in the embodiments of the present application are key verification methods, a key acquisition method, and devices. On the basis of zero-knowledge proof information, a verification device can verify whether a private key of a supervisory device can decipher ciphertext information, and whether a key obtained by means of deciphering the ciphertext information is a communication key determined by means of a negotiation between a first terminal and a second terminal, thereby ensuring that after acquiring the ciphertext information, the supervisory device can decipher same to obtain the communication key determined by means of the negotiation between the first terminal and the second terminal, and then the supervisory device can monitor sidelink communication between the first terminal and the second terminal.

200

Verification device / First terminal

S210, the first terminal transmits first information; where the first information includes a key negotiation parameter of the first terminal, ciphertext information and zero-knowledge proof information; the ciphertext information is derived based on a public key of a supervisory device, a communication key determined by negotiation between the first terminal and the second terminal, and a first random number generated by the first terminal; the zero-knowledge proof information includes first proof information and/or second proof information, the first proof information is determined based on the ciphertext information, the second proof information is determined based on the ciphertext information and the key negotiation parameter of the first terminal, the first proof information is used for verifying whether a private key of the supervisory device is capable of decrypting the ciphertext information, the second proof information is used for verifying whether a key decrypted in the ciphertext information is the communication key determined by negotiation between the first terminal and the second terminal;

S220, the verification device receives a the first information.

FIG. 2

EP 4 593 322 A1

**Description**

TECHNICAL FIELD

Embodiments of the present application relate to the field of communications, and more particular, to a key verification method, a key acquisition method and a device.

BACKGROUND

A supervisory device can supervise the 3rd generation partnership project (3GPP) communication scenario. However, the supervisory device does not involve supervision of a UE to UE relay scenario. According to the industry development trend, the supervision of the UE to UE relay scenario is inevitable in the future. How to supervise the UE to UE relay scenario is a problem that needs to be solved.

SUMMARY

The embodiments of the present application provide a key verification method, a key acquisition method and a device. A supervisory device may acquire a communication key required for monitoring in a UE to UE relay scenario by zero-knowledge proof, to realize monitoring of the UE to UE relay scenario.

In a first aspect, a key verification method is provided, which is applied to a verification device and includes:

receiving, by the verification device, first information;
where the first information includes a key negotiation parameter of a first terminal, ciphertext information and zero-knowledge proof information; the ciphertext information is derived based on a public key of a supervisory device, a communication key determined by negotiation between the first terminal and a second terminal, and a first random number generated by the first terminal; the zero-knowledge proof information includes first proof information and/or second proof information, the first proof information is determined based on the ciphertext information, the second proof information is determined based on the ciphertext information and the key negotiation parameter of the first terminal, the first proof information is used for verifying whether a private key of the supervisory device is capable of decrypting the ciphertext information, the second proof information is used for verifying whether a key decrypted in the ciphertext information is the communication key determined by negotiation between the first terminal and the second terminal; and the first terminal and the second terminal perform sidelink communication via a relay terminal.

In a second aspect, a key verification method is provided, which is applied to a first terminal, where the first terminal and a second terminal perform sidelink communication via a relay terminal and the method includes:

transmitting, by the first terminal, first information;
where the first information includes a key negotiation parameter of the first terminal, ciphertext information and zero-knowledge proof information; the ciphertext information is derived based on a public key of a supervisory device, a communication key determined by negotiation between the first terminal and the second terminal, and a first random number generated by the first terminal; the zero-knowledge proof information includes first proof information and/or second proof information, the first proof information is determined based on the ciphertext information, the second proof information is determined based on the ciphertext information and the key negotiation parameter of the first terminal, the first proof information is used for verifying whether a private key of the supervisory device is capable of decrypting the ciphertext information, the second proof information is used for verifying whether a key decrypted in the ciphertext information is the communication key determined by negotiation between the first terminal and the second terminal.

In a third aspect, a key acquisition method is provided, which is applied to a supervisory device and includes:

receiving, by the supervisory device, ciphertext information; where the ciphertext information is derived based on a public key of the supervisory device, a communication key determined by negotiation between a first terminal and a second terminal, and a first random number generated by the first terminal, and the first terminal and the second terminal perform sidelink communication via a relay terminal; and
decrypting, by the supervisory device, the ciphertext information according to a private key of the supervisory device, to obtain the communication key determined by negotiation between the first terminal and the second terminal.

In a fourth aspect, a verification device is provided to perform the method in the above first aspect.

Specifically, the verification device includes a functional module to perform the method in the above first aspect.

In a fifth aspect, a terminal device is provided to perform the method in the above second aspect.

Specifically, the terminal device includes a functional module to perform the method in the above second aspect.

In a sixth aspect, a supervisory device is provided to perform the method in the above third aspect.

Specifically, the supervisory device includes functional modules to perform the method in the above third aspect.

In a seventh aspect, a verification device is provided, which includes a processor and a memory. The memory is configured to store a computer program, and the processor is configured to call the computer program stored in the memory and run the computer program stored, to cause the verification device to perform the method in the above first aspect.

In an eighth aspect, a terminal device is provided, which includes a processor and a memory. The memory is configured to store a computer program, and the processor is configured to call the computer program stored in the memory and run the computer program, to cause the terminal device to perform the method in the above second aspect.

In a ninth aspect, a supervisory device is provided, which includes a processor and a memory. The memory is configured to store a computer program, and the processor is configured to call the computer program stored in the memory and run the computer program, to cause the supervisory device to perform the method in the above third aspect.

In a tenth aspect, an apparatus is provided to implement the method in any one of the above first to third aspects.

Specifically, the apparatus includes a processor, and the processer is configured to call a computer program from a memory and run the computer program, to cause a device equipped with the apparatus to perform the method in any one of the above first to third aspects.

In an eleventh aspect, a computer-readable storage medium is provided, which is configured to store a computer program. The computer program causes a computer to perform the method in any one of the above first to third aspects.

In a twelfth aspect, a computer program product is provided, which includes computer program instructions. The computer program instructions cause a computer to perform the method in any one of the above first to third aspects.

In a thirteenth aspect, a computer program is provided. The computer program, when running on a computer, causes the computer to perform the method in any one of the above first to third aspects.

Through the above technical solutions, based on the zero-knowledge proof information, the verification device may verify whether the private key of the supervisory device is capable of decrypting the ciphertext information, and verify whether the key decrypted in the ciphertext information is the communication key determined by negotiation between the first terminal and the second terminal, so as to ensure that the supervisory device may decrypt the ciphertext information to obtain the communication key determined by negotiation between the first terminal and the second terminal after acquiring the ciphertext information. And then, the supervisory device may monitor the sidelink communication between the first terminal and the second terminal.

BRIEF DESCRIPTION OF THE DRAWINGS

FIG. 1 is a schematic diagram of a communication system architecture applied by embodiments of the present application.

FIG. 2 is a schematic flowchart of a key verification method provided according to the embodiments of the present application.

FIG. 3 is a schematic flowchart in which a first terminal and a second terminal determine a communication key through negotiation provided according to the embodiments of the present application.

FIG. 4 is a schematic flowchart of a key acquisition method provided according to the embodiments of the present application.

FIG. 5 is a schematic block diagram of a verification device provided according to the embodiments of the present application.

FIG. 6 is a schematic block diagram of a terminal device provided according to the embodiments of the present application.

FIG. 7 is a schematic block diagram of a supervisory device provided according to the embodiments of the present application.

FIG. 8 is a schematic block diagram of a communication device provided according to embodiments of the present application.

FIG. 9 is a schematic block diagram of an apparatus provided according to the embodiments of the present application.

FIG. 10 is a schematic block diagram of a communication system provided according to the embodiments of the present application.

DETAILED DESCRIPTION

Technical solutions in the embodiments of the present application will be described below in conjunction with the accompanying drawings in the embodiments of the present application. It is apparent that the described embodiments are merely some but not all of the embodiments of the present application. With respect to the embodiments of the present application, all other embodiments obtained by those skilled in the art without paying creative effort within the protection scope of the present application.

The technical solutions of the embodiments of the present application may be applied to various communication systems, such as, a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial communication network (Non-Terrestrial Networks, NTN) system, a universal mobile telecommunication system (UMTS), wireless local area networks (WLAN), internet of things (IoT), wireless fidelity (WiFi), a fifth-generation communication (5th-Generation, 5G) system, a sixth-generation communication (6th-Generation, 5G) system or other communication systems.

Generally speaking, traditional communication systems support a limited number of connections which are easy to be implemented. However, with development of the communication technology, mobile communication systems will support not only the traditional communication, but also, for example, device to device (D2D) communication, machine to machine (M2M) communication, machine type communication (MTC), vehicle to vehicle (V2V) communication, sidelink (SL) communication, vehicle to everything (V2X) communication or the like. The embodiments of the present application may also be applied to these communication systems.

In some embodiments, a communication system in the embodiments of the present application may be applied to a carrier aggregation (CA) scenario, may also be applied to a dual connectivity (DC) scenario, and may also be applied to a standalone (SA) network deployment scenario, or applied to a non-standalone (NSA) network deployment scenario.

In some embodiments, the communication system in the embodiments of the present application may be applied to an unlicensed spectrum, where the unlicensed spectrum may also be considered as a shared spectrum; or the communication system in the embodiments of the present application may also be applied to a licensed spectrum, where the licensed spectrum may also be considered as an unshared spectrum.

In some embodiments, the communication system in the embodiments of the present application may be applied to a frequency band of FR1 (corresponding to a frequency band range of 410 MHz to 7.125 GHz), may also be applied to a frequency band of FR2 (corresponding to a frequency band range of 24.25 GHz to 52.6 GHz), and may also be applied to new frequency bands, such as, high frequency bands corresponding to a frequency band range of 52.6 GHz to 71 GHz or a frequency band range of 71 GHz to 114.25 GHz.

In the embodiments of the present application, each embodiment will be described in conjunction with a terminal device (for example, a first terminal, a second terminal and a relay terminal). The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STATION, STA) device in the WLAN, which may be a cellular phone, a cordless phone, a session initiation protocol (SIP) phone, a wireless local loop (WLL) station, or a personal digital assistant (PDA) device, a handheld device with wireless communication functions, a computing device or other processing devices connected to a wireless modem, an in-vehicle device, a wearable device, a terminal device in a next generation communication system (e.g., an NR network), a terminal device in a future evolved public land mobile network (PLMN) network, or the like.

In the embodiments of the present application, the terminal device may be deployed on land, which includes indoor or outdoor, handheld, wearable, or in-vehicle; the terminal device may also be deployed on water (e.g., on a steamship); and the terminal device may also be deployed in air (e.g., on an airplane, on a balloon, or on a satellite).

In the embodiments of the present application, the terminal device may be a mobile phone, a pad, a computer with a wireless transceiving function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, an in-vehicle communication device, a wireless communication chip/application specific integrated circuit (ASIC)/a system on chip (SoC), or the like.

As an example but not a limitation, in the embodiments of the present application, the terminal device may also be a wearable device. The wearable device may also be referred to as a wearable smart device, which is a generic term for a wearable device by using wearable technology and intelligent design for everyday wear, such as glasses, gloves, a watch, clothing, or shoes. The wearable device is a portable device that is worn directly on a body, or integrated into a user's clothing or accessories. The wearable device is not only a hardware device, but also achieves powerful functions through software supporting as well as data interaction or cloud interaction. Generalized wearable smart devices includes full-featured, large-sized devices that may implement full or partial functionality without relying on smart phones, such as a smart watch or smart glasses, and devices that focus on a certain type of application functionality only and need to be used in conjunction with other devices (such as smart phones), such as various smart bracelets or smart jewelries for monitoring physical signs.

In the embodiments of the present application, the network device may be a device used for communicating with a mobile device. The network device may be an access point (AP) in the WLAN, a base station (Base Transceiver Station, BTS) in the GSM or CDMA, may also be a base station (NodeB, NB) in the WCDMA, or may also be an evolutional base station (Evolutional Node B, eNB or eNodeB) in the LTE, a relay station or an access point, a network device or base station (gNB) or a transmission reception point (TRP) in an in-vehicle device, a wearable device, a network device in an NR network, a network device in the future evolved PLMN network, a network device in the NTN network, or the like.

As an example but not a limitation, in the embodiments of the present application, the network device may have a mobile characteristic, for example, the network device may be a mobile device. In some embodiments, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite. In some embodiments, the network device may also be a base station provided on land, water, and other places.

In the embodiments of the present application, the network device may provide services for a cell, and the terminal device communicates with the network device through transmission resources (such as frequency domain resources, or frequency spectrum resources) used by the cell. The cell may be a cell corresponding to the network device (such as the base station). The cell may belong to a macro base station or a base station corresponding to a small cell. The small cell here may include a metro cell, a micro cell, a pico cell, a femto cell, or the like. These small cells have characteristics of small coverage range and low transmission power, which are applicable for providing a data transmission service with high speed.

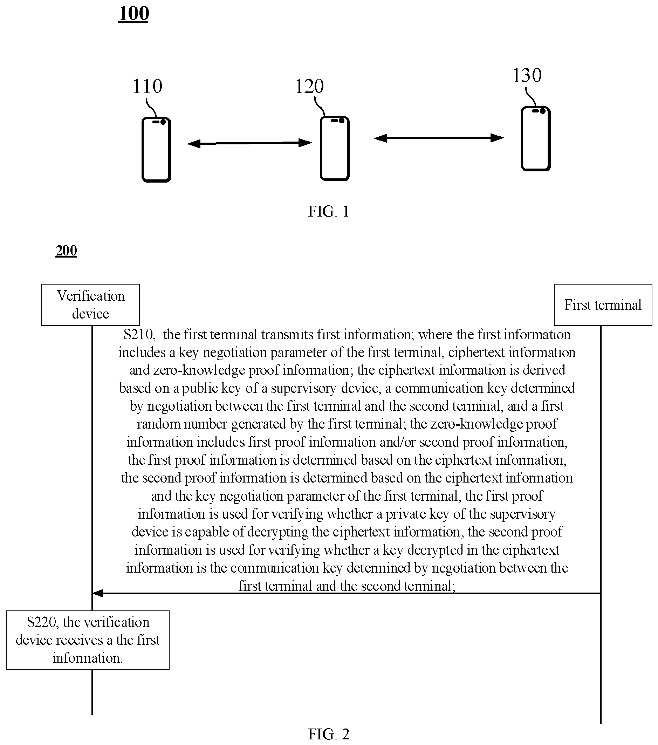

Exemplarily, a communication system 100 applied by the embodiments of the present application is illustrated in FIG. 1. The communication system 100 may include a first terminal 110, a relay terminal 120 and a second terminal 130. The first terminal 110 and the second terminal 130 perform sidelink communication via the relay terminal 120. The relay terminal 120 may provide communication coverage for a specific geographic area and communicate with terminal devices located within the coverage area.

In some embodiments, the communication system 100 may further include other network entities such as an access network device, a network controller, a mobile management entity, which are not limited in the embodiments of the present application.

It should be understood that a device in a network/system that having a communication function in the embodiments of the present application may be referred to as a communication device. Taking the communication system 100 illustrated in FIG. 1 as an example, the communication device may include the first terminal 110, the relay terminal 120 and the second terminal 130 with the communication function. The first terminal 110, the relay terminal 120 and the second terminal 130 may be specific devices described above, which will not be repeated here. The communication device may also include other devices in the communication system 100, such as a network controller, a mobility management entity, and other network entities, which are not limited in the embodiments of the present application.

It should be understood that, the terms "system" and "network" are often used interchangeably herein. The term "and/or" herein is only an association relationship to describe associated objects, meaning that there may be three relationships between associated objects, for example, "A and/or B" may represent: A exists alone, both A and B exist, and B exists alone. In addition, a character "/" herein generally means that related objects before and after this character are in an "or" relationship.

It should be understood that, the present application herein relates to a first communication device and a second communication device. The first communication device may be a terminal device, for example, a mobile phone, a machine facility, a customer premise equipment (CPE), an industrial device, a vehicle. The second communication device may be a peer communication device of the first communication device, for example, a network device, a mobile phone, an industrial device, a vehicle. In the embodiments of the present application, the first communication device may be the first terminal, and the second communication device may be the second terminal (i.e., sidelink communication).

Terms used in the section of detailed description are used only for explanation of specific embodiments of the present application and are not intended to limit the present application. The terms "first", "second", "third", "fourth" or the like in the specification and claims of the present application and the drawings are used to distinguish different objects and are not used to describe a specified sequence. Furthermore, the terms "include" and "have" and any variations thereof are intended to cover non-exclusive inclusion.

It should be understood that, "indicate" mentioned in the embodiments of the present application may mean a direct indication or an indirect indication, or represent that there is an association relationship. For example, A indicates B, which may mean that A directly indicates B, for example, B may be obtained through A; or it may mean that A indirectly indicates B, for example, A indicates C, and B may be obtained through C; or it may mean that there is an association relationship between A and B.

In the description of the embodiments of the present application, the term "correspond" may mean that there is a direct correspondence or indirect correspondence between the two, or it may mean that there is an associated relationship between the two, or it may mean a relationship of indicating and being indicated, or configuring and being configured, or the like.

In the embodiments of the present application, "predefined" or "preconfigured" may be achieved by pre-storing corresponding codes, forms or other means used for indicating relevant information in devices (e.g., including a terminal device and network device), and the present application is not limited to the specific implementation thereof. For example, predefined may refer to what is defined in a protocol.

In the embodiments of the present application, the "protocol" may refer to a standard protocol in the field of communication, for example, may be evolution of an existing LTE protocol, NR protocol, Wi-Fi protocol, or protocols related to other communication systems which are related with them, and types of protocol are not limited in the present application.

To facilitate understanding of the technical solutions of the embodiments of the present application, the technical solutions of the present application are described in detail below through specific embodiments. The following related technologies, as optional solutions, may be arbitrarily combined with the technical solutions of the embodiments of the present application, and those combined solutions all belong to the protection scope of the embodiments of the present application. The embodiments of the present application include at least part of following contents.

A supervisory device can supervise the 3rd generation partnership project (3GPP) communication scenario. However, the supervisory device does not involve supervision of a UE to UE relay scenario. According to the industry development trend, the supervision of the UE to UE relay scenario is inevitable in the future. At that time, if the supervisory device has no means to acquire a communication key, such as an encryption key, monitoring cannot be performed.

A DH (Diffie-Hellman) key exchange protocol/algorithm is a relatively common technical means when performing end to end key negotiation in 3GPP, and may be used for key negotiation between two UEs in the UE to UE relay scenario, to determine a communication key. However, the current UE to the UE relay scenario do not involve a monitoring scheme. If the communication key is negotiated directly between the two UEs, the relay terminal and other devices cannot acquire the communication key, and also cannot provide the communication key to the supervisory device.

The DH (Diffie-Hellman) key exchange protocol/algorithm is a method of ensuring that a shared key is securely traversed across an insecure network, and was proposed by Whitefield and Martin Hellman in 1976. The ingenuity of the DH (Diffie-Hellman) key exchange protocol/algorithm lies in the fact that both parties that need to communicate securely establish a key shared by both parties through an insecure channel in the complete absence of any prior information from each other. This method may be used to determine a symmetric key, and then the symmetric key may be used for encryption and decryption. However, it is to be noted that the DH (Diffie-Hellman) key exchange protocol/algorithm may only be used for exchanges of the key, but not for encryption and decryption of the message. After the communicating parties determine the key to be used, other symmetric key operation encryption algorithms are used to achieve the encryption and decryption of the message.

The Elgamal algorithm is a public key cryptographic algorithm, and may be used to establish a shared key between both parties in the DH key exchange protocol/algorithm.

In order to facilitate a better understanding of the embodiments of the present application, the problems solved by the present application are described.

At present, if the key is negotiated directly between two devices by the DH key exchange protocol/algorithm, in 3GPP, such as in the UE to the UE relay scenario in 3GPP, there is no monitoring scheme involved.

If the DH key exchange protocol/algorithm does not have an appropriate algorithm to assist in calculating keys, the following problems are prone to arise:

1) no information about the identity of both parties has been provided;
2) the DH key exchange protocol/algorithm is computationally intensive, and thus, it is vulnerable to blocking attacks; that is, an adversary requests a large number of keys, and a attacker spends a relatively large amount of computational resources to solve useless power coefficients instead of doing real work;
3) there is no scheme to prevent replay attacks; and
4) it is vulnerable to man-in-the-middle attacks.

Specifically, for example, device A and device B perform sidelink communication via device C, device C acts as device B when communicating with device A, and device C acts as device A when communicating with device B. Both device A and device B negotiate one key with device C, and then device C may monitor and transmit communication traffic. The man-in-the-middle attacks proceed as follows.

(1) Device B transmits a public key of device B in a message that is transmitted to device A.

(2) Device C intercepts and parses the message. Device C saves the public key of device B and transmits a message to device A, where the message has a user identity (ID) of device B but uses a public key YC of device C, and the message is still transmitted out as if the message came from device B. After receiving the message from device C, device A stores YC and the user ID of device B together. Similarly, device C uses YC to transmit a message to device B as if the message came from device A.

(3) Device B calculates the secret key K1 based on the private key XB and YC. Device A calculates the secret key K2 based on the private key XA and YC. Device C calculates K1 by using the private key XC and YB, and calculates K2 by using XC and YA.

(4) From now on, device C may forward the message from device A to device B or forward the message from device B to device A, and modify their ciphertexts as needed along the way. In this way, neither device A nor device B knows that they are sharing communications with device C.

Based on the above problems, the present application proposes a solution for a supervisory device to acquire a communication key required for monitoring in a UE to UE relay scenario. The supervisory device may acquire the communication key required for monitoring in the scenario of the UE to UE relay scenario by zero-knowledge proof, to realize monitoring of the UE to UE relay scenario.

The technical solutions of the present application are described in detail below through specific embodiments.

FIG. 2 is a schematic flowchart of a key verification method 200 according to the embodiments of the present application. Specifically, in the key verification method 200, a first terminal and a second terminal perform sidelink communication via a relay terminal. As illustrated in FIG. 2, the key verification method 200 may include at least part of the following contents.

In S210, the first terminal transmits first information; where the first information includes a key negotiation parameter of the first terminal, ciphertext information and zero-knowledge proof information; the ciphertext information is derived based on a public key of a supervisory device, a communication key determined by negotiation between the first terminal and the second terminal, and a first random number generated by the first terminal; the zero-knowledge proof information includes first proof information and/or second proof information, the first proof information is determined based on the ciphertext information, the second proof information is determined based on the ciphertext information and the key negotiation parameter of the first terminal, the first proof information is used for verifying whether a private key of the supervisory device is capable of decrypting the ciphertext information, the second proof information is used for verifying whether a key decrypted in the ciphertext information is the communication key determined by negotiation between the first terminal and the second terminal.

In S220, a verification device receives the first information.

In the embodiments of the present application, based on the zero-knowledge proof information, the verification device may verify whether the private key of the supervisory device is capable of decrypting the ciphertext information and verify whether the key decrypted in the ciphertext information is the communication key determined by negotiation between the first terminal and the second terminal, so as to ensure that the supervisory device may decrypt the ciphertext information to obtain the communication key determined by negotiation between the first terminal and the second terminal after acquiring the ciphertext information. And then, the supervisory device may monitor the sidelink communication between the first terminal and the second terminal.

In some embodiments, the verification device is the relay terminal, or the verification device is a third-party network device. Optionally, in this case, the zero-knowledge proof information includes the first proof information and the second proof information.

Specifically, for example, the verification device is the relay terminal, that is, the relay terminal receives the first information transmitted by the first terminal, and the relay terminal stores all information included in the first information. After the verification is passed, the relay terminal uploads some or all of information included in the first information to the blockchain, so that the supervisory device may acquire the related information required for monitoring. Where the first information is carried by one of: sidelink control information (SCI), or PC5-radio resource control (RRC).

Specifically, for example, the verification device is the third-party network device, that is, the third-party network device receives the first information transmitted by the first terminal, and the third-party network device stores all information included in the first information. After the verification is passed, the third-party network device uploads some or all of information included in the first information to the blockchain, so that the supervisory device may acquire the related information required for monitoring. The information transmission mode between the third-party network device and the first terminal may be wireless communication transmission, wired communication transmission, or transmission via other media, which is not limited in the embodiments of the present application.

Specifically, for example, the verification device is the third-party network device, that is, the first terminal transmits the first information to the relay terminal, the third-party network device receives the first information transmitted by the relay terminal, and the third-party network device stores all information included in the first information. After the verification is passed, the third-party network device uploads some or all of information included in the first information to the blockchain, so that the supervisory device may acquire the related information required for monitoring. The information transmission mode between the third-party network device and the relay terminal may be wireless communication transmission, wired communication transmission, or transmission via other media, which is not limited in the embodiments of the present application.

In some embodiments, the verification device is the supervisory device. Optionally, in this case, the zero-knowledge proof information includes the second proof information.

Specifically, for example, the first terminal transmits the first information to the relay terminal, and the supervisory device receives the first information transmitted by the relay terminal, or the supervisory device acquires the first information via the blockchain. The information transmission mode between the supervisory device and the relay terminal may be wireless communication transmission, wired communication transmission, or transmission via other media, which is not limited in the embodiments of the present application.

In some embodiments, the supervisory device may be a device that has obtained monitoring license. For example, the supervisory device may be a terminal device, also may be an access network device or a base station, also may be a core network device, also may be the third-party network device, or also may be other devices, which is not limited in the embodiments of the present application.

In some embodiments, the first terminal and the second terminal may negotiate to determine the communication key, based on a DH key exchange protocol/algorithm.

In some embodiments, the embodiments of the present application may be applied to other scenarios in addition to the scenario of the sidelink communication between the first terminal and the second terminal via the relay terminal (that is, the UE to UE relay scenario).

For example, the embodiments of the present application may also be applied to a scenario of direct communication between UE (e.g., the first terminal) and UE (e.g., the second terminal). In this scenario, the verification device may be the third-party network device or the supervisory device, that is, the verification device may acquire the first information from the first terminal or the second terminal. After the verification is passed, the supervisory device may acquire the communication key between the first terminal and the second terminal, and the first terminal and the second terminal do not need to know the behavior of the supervisory device.

For another example, the embodiments of the present application may also be applied to a scenario of direct communication between UE (e.g., the first terminal) and a zero-power consumption device (e.g., the second terminal). In this scenario, the verification device may be the third-party network device or the supervisory device, that is, the verification device may acquire the first information from the first terminal or the second terminal. After the verification is passed, the supervisory device may acquire the communication key between the first terminal and the second terminal, and the first terminal and the second terminal do not need to know the behavior of the supervisory device.

For yet another example, the embodiments of the present application may also be applied to a scenario of direct communication between UE (e.g., the first terminal) and an in-vehicle wireless device (e.g., the second terminal). In this scenario, the verification device may be the third-party network device or the supervisory device, that is, the verification device may acquire the first information from the first terminal or the second terminal. After the verification is passed, the supervisory device may acquire the communication key between the first terminal and the second terminal, and the first terminal and the second terminal do not need to know the behavior of the supervisory device.

For yet another example, the embodiments of the present application may also be applied to a scenario of direct communication between UE (e.g., the first terminal) and a sensing device (e.g., the second terminal). In this scenario, the verification device may be the third-party network device or the supervisory device, that is, the verification device may acquire the first information from the first terminal or the second terminal. After the verification is passed, the supervisory device may acquire the communication key between the first terminal and the second terminal, and the first terminal and the second terminal do not need to know the behavior of the supervisory device.

In some embodiments, the communication key determined by negotiation between the first terminal and the second terminal is determined based on a second random number generated by the first terminal and a key negotiation parameter of the second terminal. For example, the second terminal may transmit the key negotiation parameter of the second terminal to the first terminal, then, the first terminal generates the second random number, and the first terminal determines the communication key between the first terminal and the second terminal based on the second random number and the key negotiation parameter of the second terminal.

In some embodiments, the communication key determined by negotiation between the first terminal and the second terminal is determined based on a third random number generated by the second terminal and the key negotiation parameter of the first terminal. For example, the first terminal may transmit the key negotiation parameter of the first terminal to the second terminal, then, the second terminal generates the third random number, and the second terminal determines the communication key between the first terminal and the second terminal based on the third random number and the key negotiation parameter of the first terminal.

In some embodiments, the key negotiation parameter of the first terminal may be determined based on the second random number generated by the first terminal. Optionally, the second random number generated by the first terminal is a, and the key negotiation parameter of the first terminal is $g_0^a \bmod p$, where $a \in Z^*$, $Z^*$ is a positive integer field, $g_0$ is a generator, p is a random prime number, and mod represents a modulo operation.

In some embodiments, the key negotiation parameter of the second terminal may be determined based on the third random number generated by the second terminal. Optionally, the third random number generated by the second terminal is b, and the key negotiation parameter of the second terminal is $g_0^b \bmod p$, where $b \in Z^*$, $Z^*$ is a positive integer field, $g_0$ is a generator, p is a random prime number, and mod represents a modulo operation.

In some embodiments, the communication key determined by negotiation between the first terminal and the second terminal is $g_0^{ab} \bmod p$.

Where the key negotiation parameter of the first terminal is $g_0^a \bmod p$, and the key negotiation parameter of the second terminal is $g0^b \bmod p$, a is the second random number generated by the first terminal, b is the third random number generated by the second terminal, p is a random prime number, and mod represents a modulo operation.

In some embodiments, the ciphertext information is encrypted based on the Elgamal algorithm.

In some embodiments, the ciphertext information is $((g_0^{ab} \bmod p)h^r, g_1^r)$.

Where a first portion of the ciphertext information is $(g_0^{ab} \bmod p)h^r$, and a second portion of the ciphertext information is $g_1^r$.

Where $g_0$ and $g_1$ are both generators, a is the second random number generated by the first terminal, b is the third random number generated by the second terminal, p is a random prime number, $h=g_1^x$, r is the first random number generated by the first terminal, $g_1$ and h are both public keys of the supervisory device, x is the private key of the supervisory device, and mod represents a modulo operation.

For example, $g_1$ is a generator of G, and G is a q-order cyclic group of $g_1$.

In some embodiments, $g_0$ may be equal to $g_1$. For example, $g_0$ is a generator of G.

In some embodiments, $x \in [1,q-1]$.

It should be noted that the private key of the supervisory device is saved by the supervisory device, that is, x is saved by the supervisory device.

It should be noted that $g_0$ and p are public information in the DH key exchange protocol/algorithm. G, q, $g_1$ and h are public keys encrypted by the Elgamal algorithm.

In some embodiments, the first terminal generates the ciphertext information. Specifically, the first terminal generates the first random number r, $r \in [1,q-1]$. The first terminal calculates $c_1=(g_0^{ab} \bmod p)h^r$, and calculates $c_2=g_1^r$, where (c1, c2) is the ciphertext information.

In some embodiments, the supervisory device may decrypt the ciphertext information. Specifically, the supervisory device calculates $s=c_2^x$, then calculates $m=c_1 \times s^{-1}$, and m is decrypted information. That is, $m= g_0^{ab} \bmod p$, where $c_1=(g_0^{ab} \bmod p)h^r$, $c_2= g_1^r$, and x is the private key of the supervisory device.

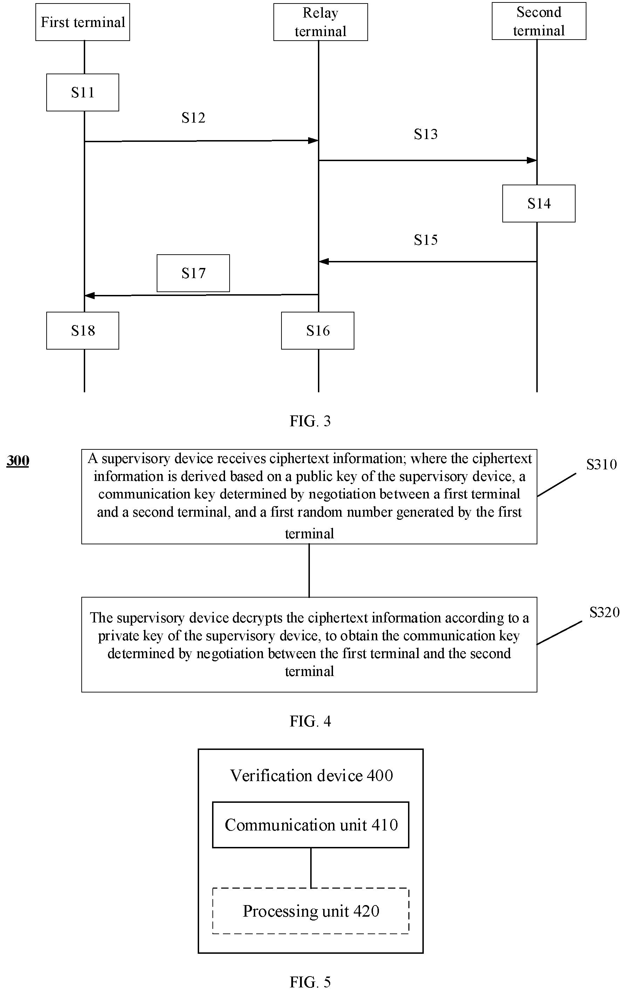

In some embodiments, a flow of determining the communication key by negotiation between the first terminal and the second terminal may be as illustrated in FIG. 3, and may specifically include some or all of S11 to S18.

In S11, the first terminal generates a random number a, and calculates a key negotiation parameter $g_0^a \bmod p$ of the first terminal based on the random number a.

In S12, the first terminal transmits $g_0^a \bmod p$ to the relay terminal.

In S13, the relay terminal transmits $g_0^a \bmod p$ to the second terminal.

In S14, the second terminal generates a random number b, calculates a key negotiation parameter $g_0^b \bmod p$ of the second terminal based on the random number b, and calculates a communication key $g_0^{ab} \bmod p$ between the first terminal and the second terminal based on the random number b and $g_0^a \bmod p$.

In S15, the second terminal transmits $g_0^b \bmod p$ and $g_0^{ab} \bmod p$ to the relay terminal.

In S16, the relay terminal saves $g_0^b \bmod p$ and $g_0^{ab} \bmod p$.

In S17, the relay terminal transmits $g_0^b \bmod p$ to the first terminal.

In S18, the first terminal calculates the communication key $g_0^{ab} \bmod p$ between the first terminal and the second terminal based on the random number a and $g_0^b \bmod p$.

In some embodiments, the verification device verifies whether the private key of the supervisory device is capable of decrypting the ciphertext information according the first proof information. In a case where a verification result corresponding to the first proof information indicates that the private key of the supervisory device is capable of decrypting the ciphertext information, the verification device verifies whether the key decrypted in the ciphertext information is the communication key determined by negotiation between the first terminal and the second terminal according to the second proof information; and in a case where a verification result corresponding to the second proof information indicates that the key decrypted in the ciphertext information is the communication key determined by negotiation between the first terminal and the second terminal, the verification device transmits the ciphertext information to the supervisory device.

Optionally, the verification device may transmit the ciphertext information to the supervisory device via the blockchain. Certainly, the verification device may also transmit the ciphertext information to the supervisory device in other ways, which is not limited in the embodiments of the present application.

In some implementations, the verification device is the relay terminal, or the verification device is the third-party network device. That is, the verification device may verify whether the private key of the supervisory device is capable of decrypting the ciphertext information based on the first proof information, and verify whether the key decrypted in the ciphertext information is the communication key determined by negotiation between the first terminal and the second terminal based on the second proof information. In a case where the verification is passed, the verification device transmits the ciphertext information to the supervisory device, so that the supervisory device may decrypt the ciphertext information by the private key of the supervisory device, and acquire the communication key determined by negotiation between the first terminal and the second terminal.

In some implementations, the verification device performs zero-knowledge verification according to the first proof information, and in a case where a verification result is that a value of a first random number in a first portion of the ciphertext information is same as that of a first random number in a second portion of the ciphertext information, the verification result corresponding to the first proof information indicates that the private key of the supervisory device is capable of decrypting the ciphertext information. For example, the ciphertext information is $(c_1, c_2)$, that is, the first portion of the ciphertext information is $c_1$, and the second portion of the ciphertext information is $c_2$, where $c_1=(g_0{}^{ab} \bmod p)h^r$, and $c_2=g_1{}^r$. Specifically, the verification device performs zero-knowledge verification according to the first proof information, and in a case where the verification result is that the random numbers r in $c_1$ and $c_2$ are same, it may indicate that the private key of the supervisory device is capable of decrypting the ciphertext information.

In some implementations, the verification device performs zero-knowledge verification according to the second proof information, and in a case where a verification result is that a value of a second random number in the key decrypted in the ciphertext information is the same as that of a second random number in the key negotiation parameter of the first terminal, the verification result corresponding to the second proof information indicates that the key decrypted in the ciphertext information is the communication key determined by negotiation between the first terminal and the second terminal. For example, the key decrypted in the ciphertext information is $g_0{}^{ab} \bmod p$, and the key negotiation parameter of the first terminal is $g_0{}^a \bmod p$. Specifically, the verification device performs zero-knowledge verification according to the second proof information, and in a case where the verification result is that the random numbers a in $g_0{}^{ab} \bmod p$ and $g_0{}^a \bmod p$ are same, it may indicate that the key decrypted in the ciphertext information is the communication key determined by negotiation between the first terminal and the second terminal.

In some embodiments, the verification device decrypts the ciphertext information according to the private key of the supervisory device. The verification device verifies whether the key decrypted in the ciphertext information is the communication key determined by negotiation between the first terminal and the second terminal according to the second proof information. In a case where a verification result corresponding to the second proof information indicates that the key decrypted in the ciphertext information is the communication key determined by negotiation between the first terminal and the second terminal, the verification device decrypts the ciphertext information according to the private key of the supervisory device, to acquire the communication key determined by negotiation between the first terminal and the second terminal.

Optionally, the verification device receives the first information transmitted by the relay device. Certainly, the verification device may also acquire the first information through other devices, which is not limited in the embodiments of the present application.

In some implementations, the verification device is the supervisory device. That is, the supervisory device decrypts the ciphertext information according to the private key of the supervisory device; and the supervisory device verifies whether the key decrypted in the ciphertext information is the communication key determined by negotiation between the first terminal and the second terminal according to the second proof information. In a case where a verification result corresponding to the second proof information indicates that the key decrypted in the ciphertext information is the communication key determined by negotiation between the first terminal and the second terminal, the supervisory device decrypts the ciphertext information according to the private key of the supervisory device, to acquire the communication key determined by negotiation between the first terminal and the second terminal.

In some implementations, the verification device performs zero-knowledge verification according to the second proof information, and in a case where a verification result is that a value of a second random number in the key decrypted in the ciphertext information is the same as that of a second random number in the key negotiation parameter of the first terminal, the verification result corresponding to the second proof information indicates that the key decrypted in the ciphertext information is the communication key determined by negotiation between the first terminal and the second terminal. For example, the key decrypted in the ciphertext information is $g_0{}^{ab} \bmod p$, and the key negotiation parameter of the first terminal is $g_0{}^a \bmod p$. Specifically, the verification device performs zero-knowledge verification according to the second proof information, and in a case where the verification result is that the random numbers a in $g_0{}^{ab} \bmod p$ and $g_0{}^a \bmod p$ are the same, it may indicate that the key decrypted in the ciphertext information is the communication key determined by negotiation between the first terminal and the second terminal.

In some embodiments, the zero-knowledge proof used in the embodiments of the present application is a linear equation proof, where the linear equation proof may be shown as Formula 1.

$$\text{POK}\left\{(x_1,\cdots,x_l): y = \sum_{i=1}^{l} g_i^{x_i}, \sum_{i=1}^{l} a_i x_i = c\right\} \qquad \text{(Formula 1)}$$

In the linear equation proof algorithm, c, $a_1,\ldots,a_l$ are public values. The proofer, without revealing $x_1,\cdots,x_l$, makes the verifier convince that the proofer had $x_1,\cdots,x_l$ and meets $\sum_{i=1}^{l} a_i x_i = c$ .

Specifically, the proofer proves to the verifier that the element y is a discrete logarithm value of $(x_1,\cdots,x_l)$ with a base- $g_1,\cdots,g_l \in G$ and meets the linear equation $\sum_{i=1}^{l} a_i x_i = c$ , where c and $a_i$ are public values. For example, the proofer may be the first terminal, and the verifier may be the verification device.

In some embodiments, it is proved that the random numbers r in $c_1$ and $c_2$ of the ciphertext information $(c_1, c_2)$ are equal, where $c_1=(g_0{}^{ab} \bmod p)h^r$ and $c_2= g_1{}^r$. Specifically, an equation is constructed: let $g_0{}^a \bmod p$ in $c_1$ be g, b in $c_1$ be m, h in $c_1$ be y, and r in $c_1$ be $r_1$; and let $g_1$ in $c_2$ be h and r in $c_2$ be $r_2$, that is, $c_1 = g^m y^{r_1}$ and $c_2 = h^{r_2}$. An equation x= $c_1 \times c_2$ is constructed, so as to prove that $0 \cdot m + 1 \cdot r_1 + (-1) \cdot r_2 = 0$ (that is, prove $r_1=r_2$).

Proofer: the random numbers $v_1$, $v_2$, $v_3$ are selected from $Z^*$; commitment $t = g^{v_1} y^{v_2} h^{v_3}$ is calculated, and $0 \cdot v_1 + 1 \cdot v_2 + (-1) \cdot v_3 = 0$ is meet; challenge $c = H(g, y, h, t, x)$ is calculated; responses $s_1 = v_1 - cm$, $s_2 = v_2 - cr_1$ and $s_3 = v_3 - cr_2$ are calculated; proof information $(s_1, s_2, s_3, t)$ is constructed (that is, the first proof information is, $(s_1, s_2, s_3, t)$); and the proof information $(s_1, s_2, s_3, t)$ is transmitted to the verifier.

Verifier: it is checked whether the equation $g^{s_1} y^{s_2} h^{s_3} x^c = t$ holds (if and only if $x = c_1 \times c_2$, the equation holds); it is checked whether the equation $0 \cdot s_1 + 1 \cdot s_2 + (-1) \cdot s_3 = 0$ holds (if and only if $r_1 = r_2$, the equation holds). That is, the equation $g^{s_1} y^{s_2} h^{s_3} x^c = t$ holds if and only if $x = c_1 \times c_2$, and the equation $0 \cdot s_1 + 1 \cdot s_2 + (-1) \cdot s_3 = 0$ holds if and only if $r_1 = r_2$. In other words, in a case where $0 \cdot s_1 + 1 \cdot s_2 + (-1) \cdot s_3 = 0$ holds, the verification result is that the random numbers r in $c_1$ and $c_2$ are same, it is indicated that the private key of the supervisory device is capable of decrypting the ciphertext information.

In some embodiments, the ciphertext information is $(c_1, c_2)$, where $c_1=(g_0{}^{ab} \bmod p)h^r$, and $c_2=g_1{}^r$. It is proved that the random number a in $(g_0{}^{ab} \bmod p)h^r$ is equal to the random number a in $g_0{}^a \bmod p$. Specifically, an equation is constructed: let h in $(g_0{}^{ab} \bmod p)h^r$ be g, r in $(g_0{}^{ab} \bmod p)h^r$ be m, $g_0{}^b$ in $(g_0{}^{ab} \bmod p)h^r$ be y, and a in $(g_0{}^{ab} \bmod p)h^r$ be $r_1$; and let go in $g_0{}^a \bmod p$ be h and a in $g_0{}^a \bmod p$ be $r_2$, that is, $c_1 = g^m y^{r_1}$ and $c_2 = h^{r_2}$. An equation x= $c_1 \times c_2$ is constructed, so as to prove that $0 \cdot m + 1 \cdot r_1 + (-1) \cdot r_2 = 0$ (that is, prove $r_1=r_2$).

Proofer: the random numbers $v_1, v_2, v_3$ are selected from $Z^*$; commitment $t = g^{v_1} y^{v_2} h^{v_3}$ is calculated, and $0 \cdot v_1 + 1 \cdot v_2 + (-1) \cdot v_3 = 0$ is meet; challenge $c = H(g, y, h, t, x)$ is calculated; responses $s_1 = v_1 - cm$, $s_2 = v_2 - cr_1$ and $s_3 = v_3 - cr_2$ are calculated, proof information $(s_1, s_2, s_3, t)$ is constructed (that is, the second proof information is $(s_1, s_2, s_3, t)$); and the proof information $(s_1, s_2, s_3, t)$ is transmitted to the verifier.

Verifier: it is checked whether the equation $g^{s_1} y^{s_2} h^{s_3} x^c = t$ holds (if and only if $x = c_1 \times c_2$, the equation holds); it is checked whether the equation $0 \cdot s_1 + 1 \cdot s_2 + (-1) \cdot s_3 = 0$ holds (if and only if $r_1 = r_2$, the equation holds). That is, the equation $g^{s_1} y^{s_2} h^{s_3} x^c = t$ holds if and only if $x = c_1 \times c_2$, and the equation $0 \cdot s_1 + 1 \cdot s_2 + (-1) \cdot s_3 = 0$ holds if and only if $r_1 = r_2$. In other words, in a case where $0 \cdot s_1 + 1 \cdot s_2 + (-1) \cdot s_3 = 0$ holds, the verification result is that the random numbers a in $(g_0{}^{ab} \bmod p)h^r$ and $g_0{}^a \bmod p$ are equal, which may indicate that the key decrypted in the ciphertext information is the communication key determined by negotiation between the first terminal and the second terminal.

Therefore, in the embodiments of the present application, based on the zero-knowledge proof information, the verification device may verify whether the private key of the supervisory device is capable of decrypting the ciphertext information, and verify whether the key decrypted in the ciphertext information is the communication key determined by negotiation between the first terminal and the second terminal, so as to ensure that the supervisory device may decrypt the ciphertext information to obtain the communication key determined by negotiation between the first terminal and the second terminal after acquiring the ciphertext information. And then, the supervisory device may monitor the sidelink communication between the first terminal and the second terminal.

The embodiments at the verification device side of the present application are described in detail in combination with FIG. 2 to FIG. 3 above. The embodiments at the supervisory device side of the present application are described in detail in combination with FIG. 4. It should be understood that the embodiments at the supervisory device side and the embodiments at the verification device side correspond to each other, and similar description may refer to the embodiments at the verification device side.

FIG. 4 is a schematic flowchart of a key acquisition method 300 according to the embodiments of the present application. Specifically, as illustrated in FIG. 4, the key acquisition method 300 may include at least part of the following contents.

In S310, a supervisory device receives ciphertext information; where the ciphertext information is derived based on a public key of the supervisory device, a communication key determined by negotiation between a first terminal and a second terminal, and a first random number generated by the first terminal, and the first terminal and the second terminal perform sidelink communication via a relay terminal.

In S320, the supervisory device decrypts the ciphertext information according to a private key of the supervisory device, to obtain the communication key determined by negotiation between the first terminal and the second terminal.

In some embodiments, the supervisory device receives confirmation information for confirming that verification based on zero-knowledge proof information is passed. Specifically, as described in the above key verification method 200, based on the zero-knowledge proof information, the verification device verifies whether the private key of the supervisory device is capable of decrypting the ciphertext information, and verifies whether a key decrypted in the ciphertext information is the communication key determined by negotiation between the first terminal and the second terminal. After the verification is passed, the verification device may transmit the confirmation information for confirming that the verification is passed.

In some embodiments, the supervisory device decrypts the ciphertext information after verifying that the confirmation information is valid. That is, the above S320 is performed after the supervisory device verifies that the confirmation information is valid.

In some embodiments, the supervisory device receives the ciphertext information and/or the confirmation information via the blockchain. Certainly, the supervisory device may also acquire the ciphertext information in other ways. Optionally, the ciphertext information and/or the confirmation information may be provided by the verification device.

In the embodiments of the present application, based on the zero-knowledge proof information, the verification device may verify whether the private key of the supervisory device is capable of decrypting the ciphertext information, and verify whether the key decrypted in the ciphertext information is the communication key determined by negotiation between the first terminal and the second terminal, so as to ensure that the supervisory device may decrypt the ciphertext information to obtain the communication key determined by negotiation between the first terminal and the second terminal after acquiring the ciphertext information. And then, the supervisory device may monitor the sidelink communication between the first terminal and the second terminal.

Optionally, the verification device may generate the confirmation information after the verification is passed, and transmit the confirmation information for confirming that the verification is passed to the supervisory device, or upload the confirmation information for confirming that the verification is passed to the blockchain, to enable the supervisory device to acquire the confirmation information via the blockchain.

In some embodiments, the verification device is the relay terminal, or the verification device is a third-party network device.

Specifically, for example, the verification device is the relay terminal, that is, the relay terminal receives the first information transmitted by the first terminal, and the relay terminal stores all information included in the first information. After the verification is passed, the relay terminal uploads the ciphertext information to the blockchain, so that the supervisory device may acquire the ciphertext information. Optionally, the information transmission mode between the relay device and the supervisory device may be wireless communication transmission, wired communication transmission, or transmission via other media, which is not limited in the embodiments of the present application,

Where the first information includes a key negotiation parameter of the first terminal, ciphertext information and zero-knowledge proof information; the ciphertext information is derived based on a public key of the supervisory device, a communication key determined by negotiation between the first terminal and a second terminal, and a first random number generated by the first terminal; the zero-knowledge proof information includes first proof information and/or second proof information, the first proof information is determined based on the ciphertext information, the second proof information is determined based on the ciphertext information and the key negotiation parameter of the first terminal, the first proof information is used for verifying whether a private key of the supervisory device is capable of decrypting the ciphertext information, and the second proof information is used for verifying whether a key decrypted in the ciphertext information is the communication key determined by negotiation between the first terminal and the second terminal. The first information is carried through one of: SCI, or PC5-RRC.

Specifically, for example, the verification device is the third-party network device, that is, the third-party network device receives the first information transmitted by the first terminal, and the third-party network device stores all information included in the first information. After the verification is passed, the third-party network device uploads the ciphertext information included in the first information to the blockchain, so that the supervisory device may acquire the ciphertext information. The information transmission mode between the third-party network device and the first terminal may be wireless communication transmission, wired communication transmission, or transmission via other media, which is not limited in the embodiments of the present application.

Specifically, for example, the verification device is the third-party network device, that is, the first terminal transmits the first information to the relay terminal, the third-party network device receives the first information transmitted by the relay terminal, and the third-party network device stores all information included in the first information. After the verification is passed, the third-party network device uploads the ciphertext information included in the first information to the blockchain, so that the supervisory device may acquire the ciphertext information. The information transmission mode between the third-party network device and the relay terminal may be wireless communication transmission, wired communication transmission, or transmission via other media, which is not limited in the embodiments of the present application.

In some embodiments, the supervisory device may be a device that has obtained monitoring license. The supervisory device may be a terminal device, also may be an access network device, also may be a core network device, or also may be other devices, which is not limited in the embodiments of the present application.

In some embodiments, the first terminal and the second terminal may negotiate to determine the communication key, based on a DH key exchange protocol/algorithm.

In some embodiments, the embodiments of the present application may be applied to other scenarios in addition to the scenario of the sidelink communication between the first terminal and the second terminal via the relay terminal (that is, the UE to UE relay scenario).

For example, the embodiments of the present application may also be applied to a scenario of direct communication between UE (e.g., the first terminal) and UE (e.g., the second terminal). In this scenario, the verification device may be the third-party network device or the supervisory device, that is, the verification device may acquire the first information from the first terminal or the second terminal. After the verification is passed, the supervisory device may acquire the communication key between the first terminal and the second terminal, and the first terminal and the second terminal do not need to know the behavior of the supervisory device.

For another example, the embodiments of the present application may also be applied to a scenario of direct communication between UE (e.g., the first terminal) and a zero-power consumption device (e.g., the second terminal). In this scenario, the verification device may be the third-party network device or the supervisory device, that is, the verification device may acquire the first information from the first terminal or the second terminal. After the verification is passed, the supervisory device may acquire the communication key between the first terminal and the second terminal, and the first terminal and the second terminal do not need to know the behavior of the supervisory device.

For yet another example, the embodiments of the present application may also be applied to a scenario of direct communication between UE (e.g., the first terminal) and an in-vehicle wireless device (e.g., the second terminal). In this scenario, the verification device may be the third-party network device or the supervisory device, that is, the verification device may acquire the first information from the first terminal or the second terminal. After the verification is passed, the supervisory device may acquire the communication key between the first terminal and the second terminal, and the first terminal and the second terminal do not need to know the behavior of the supervisory device.

For yet another example, the embodiments of the present application may also be applied to a scenario of direct communication between UE (e.g., the first terminal) and a sensing device (e.g, the second terminal). In this scenario, the verification device may be the third-party network device or the supervisory device, that is, the verification device may acquire the first information from the first terminal or the second terminal. After the verification is passed, the supervisory device may acquire the communication key between the first terminal and the second terminal, and the first terminal and the second terminal do not need to know the behavior of the supervisory device.

In some embodiments, the communication key determined by negotiation between the first terminal and the second terminal is determined based on a second random number generated by the first terminal and a key negotiation parameter of the second terminal. For example, the second terminal may transmit the key negotiation parameter of the second terminal to the first terminal, then, the first terminal generates the second random number, and the first terminal determines the communication key between the first terminal and the second terminal based on the second random number and the key negotiation parameter of the second terminal.

In some embodiments, the communication key determined by negotiation between the first terminal and the second terminal is determined based on a third random number generated by the second terminal and the key negotiation parameter of the first terminal. For example, the first terminal may transmit the key negotiation parameter of the first terminal to the second terminal, then, the second terminal generates the third random number, and the second terminal determines the communication key between the first terminal and the second terminal based on the third random number and the key negotiation parameter of the first terminal.

In some embodiments, the key negotiation parameter of the first terminal may be determined based on the second random number generated by the first terminal. Optionally, the second random number generated by the first terminal is a, and the key negotiation parameter of the first terminal is $g_0^a \bmod p$, where $a \in Z^*$, $Z^*$ is a positive integer field, $g_0$ is a generator, p is a random prime number, and mod represents a modulo operation.

In some embodiments, the key negotiation parameter of the second terminal may be determined based on the third random number generated by the second terminal. Optionally, the third random number generated by the second terminal is b, and the key negotiation parameter of the second terminal is $g_0^b \bmod p$, where $b \in Z^*$, $Z^*$ is a positive integer field, $g_0$ is a generator, p is a random prime number, and mod represents a modulo operation.

In some embodiments, the communication key determined by negotiation between the first terminal and the second terminal is $g_0^{ab} \bmod p$.

Where the key negotiation parameter of the first terminal is $g_0^a \bmod p$, and the key negotiation parameter of the second terminal is $g_0^b \bmod p$, a is the second random number generated by the first terminal, b is the third random number generated by the second terminal, p is a random prime number, and mod represents a modulo operation.

In some embodiments, the ciphertext information is encrypted based on the Elgamal algorithm.

In some embodiments, the ciphertext information is $((g_0^{ab} \bmod p)h^r, g_1^r)$.

Where a first portion of the ciphertext information is $(g_0^{ab} \bmod p)h^r$, and a second portion of the ciphertext information is $g_1^r$.

Where $g_0$ and $g_1$ are both generators, a is the second random number generated by the first terminal, b is the third random number generated by the second terminal, p is a random prime number, $h=g_1^x$, r is the first random number generated by the first terminal, $g_1$ and h are both public keys of the supervisory device, x is the private key of the supervisory device, and mod represents a modulo operation.

For example, $g_1$ is a generator of G, and G is a q-order cyclic group of $g_1$.

In some embodiments, $g_0$ may be equal to $g_1$. For example, $g_0$ is a generator of G.

In some embodiments, $x \in [1,q-1]$.

It should be noted that the private key of the supervisory device is saved by the supervisory device, that is, x is saved by the supervisory device.

It should be noted that $g_0$ and p are public information in the DH key exchange protocol/algorithm. G, q, $g_1$ and h are public keys encrypted by the Elgamal algorithm.

In some embodiments, the first terminal generates the ciphertext information. Specifically, the first terminal generates the first random number r, $r \in [1,q-1]$, The first terminal calculates $c_1=(g_0^{ab} \bmod p)h^r$, and calculates $c_2= g_1^r$, where (c1, c2) is the ciphertext information.

In some embodiments, the supervisory device may decrypt the ciphertext information. Specifically, the supervisory device calculates $s=c_2^x$, then calculates $m= c_1 \times s^{-1}$, and m is the decrypted information. That is, $m= g_0^{ab} \bmod p$, where $c_1=(g_0^{ab} \bmod p)h^r$, $c_2= g_1^r$, and x is the private key of the supervisory device.

Therefore, in the embodiments of the present application, based on the zero-knowledge proof information, the verification device may verify whether the private key of the supervisory device is capable of decrypting the ciphertext information, and verify whether the key decrypted in the ciphertext information is the communication key determined by negotiation between the first terminal and the second terminal, so as to ensure that the supervisory device may decrypt the ciphertext information to obtain the communication key determined by negotiation between the first terminal and the second terminal after acquiring the ciphertext information. And then, the supervisory device may monitor the sidelink communication between the first terminal and the second terminal.

The method embodiments of the present application are described in detail with reference to FIGS. 2 to 4 above, and device embodiments of the present application will be described in detail with reference to FIGS. 5 to 10 below. It should be understood that the device embodiments and the method embodiments correspond to each other, and similar descriptions may be made with reference to the method embodiments.

FIG. 5 illustrates a schematic block diagram of a verification device 400 according to the embodiments of the present application. As illustrated in FIG. 5, the verification device 400 includes:

a communication unit 410, configured to receive first information;
where the first information includes a key negotiation parameter of a first terminal, ciphertext information and zero-knowledge proof information; the ciphertext information is derived based on a public key of a supervisory device, a communication key determined by negotiation between the first terminal and a second terminal, and a first random number generated by the first terminal; the zero-knowledge proof information includes first proof information and second proof information, the first proof information is determined based on the ciphertext information, the second proof information is determined based on the ciphertext information and/or the key negotiation parameter of the first terminal, the first proof information is used for verifying whether a private key of the supervisory device is capable of decrypting the ciphertext information, the second proof information is used for verifying whether a key decrypted in the ciphertext information is the communication key determined by negotiation between the first terminal and the second terminal; and the first terminal and the second terminal perform sidelink communication via a relay terminal.

In some embodiments, the verification device 400 further includes a processing unit 420.

The processing unit 420 is configured to verify whether the private key of the supervisory device is capable of decrypting the ciphertext information according the first proof information.

In a case where a verification result corresponding to the first proof information indicates that the private key of the supervisory device is capable of decrypting the ciphertext information, the processing unit 420 is configured to verify, according to the second proof information, whether the key decrypted in the ciphertext information is the communication key determined by negotiation between the first terminal and the second terminal.

In a case where a verification result corresponding to the second proof information indicates that the key decrypted in the ciphertext information is the communication key determined by negotiation between the first terminal and the second terminal, the communication unit 410 is further configured to transmit the ciphertext information to the supervisory device.

In some embodiments, the communication unit 410 is specifically configured to:
transmit the ciphertext information to the supervisory device via a blockchain.

In some embodiments, the verification device is the relay terminal, or the verification device is a third-party network device.

In some embodiments, the verification device 400 further includes a processing unit 420.

The processing unit 420 is configured to decrypt the ciphertext information according to the private key of the supervisory device;

The processing unit 420 is configured to verify, according to the second proof information, whether the key decrypted in the ciphertext information is the communication key determined by negotiation between the first terminal and the second terminal.

In a case where a verification result corresponding to the second proof information indicates that the key decrypted in the ciphertext information is the communication key determined by negotiation between the first terminal and the second terminal, the processing unit 420 is configured to acquire the communication key determined by negotiation between the first terminal and the second terminal.

In some embodiments, the communication unit 410 is specifically configured to:
receive the first information transmitted by the relay terminal.

In some embodiments, the verification device is the supervisory device.

In some embodiments, the processing unit 420 is specifically configured to:
perform zero-knowledge verification according to the first proof information; and in a case where a verification result is that a value of a first random number in a first portion of the ciphertext information is same as that of a first random number in a second portion of the ciphertext information, the verification result corresponding to the first proof information indicates that the private key of the supervisory device is capable of decrypting the ciphertext information.

In some embodiments, the processing unit 420 is specifically configured to:
perform zero-knowledge verification according to the second proof information, and in a case where a verification result is that a value of a second random number in the key decrypted in the ciphertext information is the same as that of a second random number in the key negotiation parameter of the first terminal, the verification result corresponding to the second proof information indicates that the key decrypted in the ciphertext information is the communication key determined by negotiation between the first terminal and the second terminal.

In some embodiments, the communication key determined by negotiation between the first terminal and the second terminal is determined based on a second random number generated by the first terminal and a key negotiation parameter of the second terminal; and/or
the communication key determined by negotiation between the first terminal and the second terminal is determined based on a third random number generated by the second terminal and the key negotiation parameter of the first terminal.

In some embodiments, the communication key determined by negotiation between the first terminal and the second terminal is $g_0^{ab} \bmod p$.

Where the key negotiation parameter of the first terminal is $g_0^a \bmod p$, and the key negotiation parameter of the second terminal is $g_0^b \bmod p$, a is the second random number, b is the third random number, p is a random prime number, and mod represents a modulo operation.

In some embodiments, the ciphertext information is $((g_0^{ab} \bmod p)h^r, g_1^r)$.

Where a first portion of the ciphertext information is $(g_0^{ab} \bmod p)h^r$, and a second portion of the ciphertext information is $g_1^r$.

Where $g_0$ and $g_1$ are both generators, a is a second random number generated by the first terminal, b is a third random number generated by the second terminal, p is a random prime number, $h=g_1^x$, r is the first random number generated by the first terminal, $g_1$ and h are both public keys of the supervisory device, x is the private key of the supervisory device, and mod represents a modulo operation.

In some embodiments, the above communication unit may be a communication interface or a transceiver, or an input/output interface of a communication chip or a system-on-chip. The processing unit may be one or more processors.

It should be understood that the verification device 400 according to embodiments of the present application may correspond to the verification device in the method embodiments of the present application, and the above and other operations and/or functions of each unit in the verification device 400 are intend to implement the corresponding processes of the verification device in the method 200 illustrated in FIG. 2, respectively, which will not be repeated here for the sake of brevity.

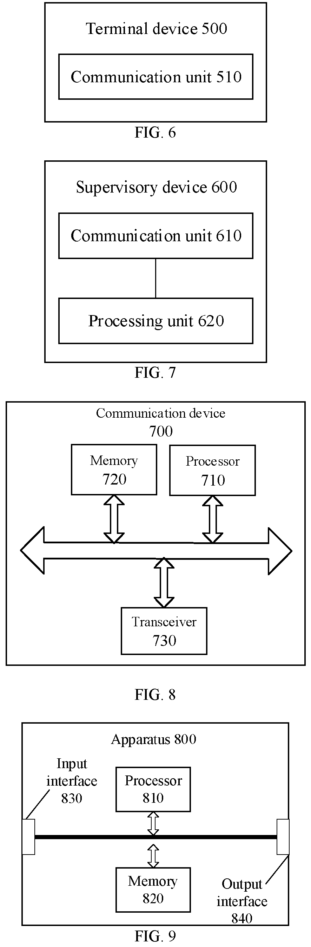

FIG. 6 illustrates a schematic block diagram of a terminal device 500 according to the embodiments of the present application. The terminal device 500 is a first terminal, and the first terminal and a second terminal perform sidelink communication via a relay terminal. As illustrated in FIG. 6, the terminal device 500 includes:

a communication unit 510, configured to transmit first information;
the first information includes a key negotiation parameter of the first terminal, ciphertext information and zero-knowledge proof information; the ciphertext information is derived based on a public key of a supervisory device, a communication key determined by negotiation between the first terminal and the second terminal, and a first random number generated by the first terminal; the zero-knowledge proof information includes first proof information and/or second proof information, the first proof information is determined based on the ciphertext information, the second proof information is determined based on the ciphertext information and the key negotiation parameter of the first terminal, the first proof information is used for verifying whether a private key of the supervisory device is capable of decrypting the ciphertext information, the second proof information is used for verifying whether a key decrypted in the ciphertext information is the communication key determined by negotiation between the first terminal and the second terminal.

In some embodiments, the operation that the first proof information is used for verifying whether a private key of the supervisory device is capable of decrypting the ciphertext information includes:
the first proof information is used for a verification device to perform zero-knowledge verification, and in a case where a verification result is that a value of a first random number in a first portion of the ciphertext information is same as that of a first random number in a second portion of the ciphertext information, a verification result corresponding to the first proof information indicates that the private key of the supervisory device is capable of decrypting the ciphertext information.

In some embodiments, the operation that the second proof information is used for verifying whether a key decrypted in the ciphertext information is the communication key determined by negotiation between the first terminal and the second terminal includes:
the second proof information is used for a verification device to perform zero-knowledge verification, and in a case where a verification result is that a value of a second random number in the key decrypted in the ciphertext information is the same as that of a second random number in the key negotiation parameter of the first terminal, a verification result corresponding to the second proof information indicates that the key decrypted in the ciphertext information is the communication key determined by negotiation between the first terminal and the second terminal.

In some embodiments, the verification device is the relay terminal, or the verification device is a third-party network device, or the verification device is the supervisory device.

In some embodiments, the communication key determined by negotiation between the first terminal and the second terminal is determined based on a second random number generated by the first terminal and a key negotiation parameter of the second terminal; and/or
the communication key determined by negotiation between the first terminal and the second terminal is determined based on a third random number generated by the second terminal and the key negotiation parameter of the first terminal.

In some embodiments, the communication key determined by negotiation between the first terminal and the second terminal is $g_0^{ab} \bmod p$.

Where the key negotiation parameter of the first terminal is $g_0^a \bmod p$, and the key negotiation parameter of the second terminal is $g_0^b \bmod p$, a is the second random number, b is the third random number, p is a random prime number, and mod represents a modulo operation.

In some embodiments, the ciphertext information is $((g_0^{ab} \bmod p)h^r, g_1^r)$.

Where a first portion of the ciphertext information is $(g_0^{ab} \bmod p)h^r$, and a second portion of the ciphertext information is $g_1^r$.

Where $g_0$ and $g_1$ are both generators, a is a second random number generated by the first terminal, b is a third random number generated by the second terminal, p is a random prime number, $h=g_1^x$, r is the first random number generated by the first terminal, $g_1$ and h are both public keys of the supervisory device, x is the private key of the supervisory device, and mod represents a modulo operation.

In some embodiments, the above communication unit may be a communication interface or a transceiver, or an input/output interface of a communication chip or a system-on-chip.

It should be understood that the terminal device 500 according to the embodiments of the present application may correspond to the first terminal in the method embodiments of the present application, and the above and other operations and/or functions of each unit in the terminal device 500 are intend to implement the corresponding processes of the first terminal in the method 200 illustrated in FIG. 2, respectively, which will not be repeated here for the sake of brevity.

FIG. 7 illustrates a schematic block diagram of a supervisory device 600 according to the embodiments of the present application. As illustrated in FIG. 7, the supervisory device 600 includes:

a communication unit 610, configured to receive ciphertext information; where the ciphertext information is derived based on a public key of the supervisory device, a communication key determined by negotiation between a first terminal and a second terminal, and a first random number generated by the first terminal, and the first terminal and the second terminal perform sidelink communication via a relay terminal; and
a processing unit 620, configured to decrypt the ciphertext information according to a private key of the supervisory device, to obtain the communication key determined by negotiation between the first terminal and the second terminal.

In some embodiments, the communication unit 610 is specifically configured to:
receive the ciphertext information via a blockchain.

In some embodiments, the communication unit 610 is further configured to receive confirmation information for confirming that verification based on zero-knowledge proof information is passed, where the zero-knowledge proof information is used for verifying whether the private key of the supervisory device is capable of decrypting the ciphertext information and verifying whether a key decrypted in the ciphertext information is the communication key determined by negotiation between the first terminal and the second terminal.

The processing unit 620 is specifically configured to:
decrypt the ciphertext information according to the private key of the supervisory device after verifying that the confirmation information is valid.

In some embodiments, the communication unit 610 is specifically configured to:
receive, via a blockchain, the confirmation information for confirming that verification based on zero-knowledge proof information is passed.

In some embodiments, the communication key determined by negotiation between the first terminal and the second terminal is determined based on a second random number generated by the first terminal and a key negotiation parameter of the second terminal; and/or
the communication key determined by negotiation between the first terminal and the second terminal is determined based on a third random number generated by the second terminal and the key negotiation parameter of the first terminal.

In some embodiments, the communication key determined by negotiation between the first terminal and the second terminal is $g_0^{ab} \bmod p$.

Where the key negotiation parameter of the first terminal is $g_0^a \bmod p$, the key negotiation parameter of the second terminal is $g_0^b \bmod p$, a is the second random number, b is the third random number, p is a random prime number, and mod represents a modulo operation.

In some embodiments, the ciphertext information is $((g_0^{ab} \bmod p)h^r, g_1^r)$.

Where a first portion of the ciphertext information is $(g_0^{ab} \bmod p)h^r$, and a second portion of the ciphertext information is $g_1^r$.

Where $g_0$ and $g_1$ are both generators, a is a second random number generated by the first terminal, b is a third random number generated by the second terminal, p is a random prime number, $h=g_1^x$, r is the first random number generated by the first terminal, $g_1$ and h are both public keys of the supervisory device, x is the private key of the supervisory device, and mod represents a modulo operation.

In some embodiments, the above communication unit may be a communication interface or a transceiver, or an input/output interface of a communication chip or a system-on-chip. The processing unit may be one or more processors.

It should be understood that the supervisory device 600 according to the embodiments of the present application may correspond to the supervisory device in the method embodiments of the present application, and the above and other operations and/or functions of each unit in the supervisory device 600 are intend to implement the corresponding processes of the supervisory device in the method 300 illustrated in FIG. 4, respectively, which will not be repeated here for the sake of brevity.

FIG. 8 is a schematic structural diagram of a communication device 700 provided according to the embodiments of the present application. The communication device 700 illustrated in FIG. 8 includes a processor 710, and the processor 710 may call a computer program from a memory and run the computer program, to implement the methods in the embodiments of the present application.

In some embodiments, as illustrated in FIG. 8, the communication device 700 may also include a memory 720. The processor 710 may call a computer program from the memory 720 and run the computer program, to implement the methods in the embodiments of the present application.

The memory 720 may be a separate device independent from the processor 710, or may be integrated into the processor 710.

In some embodiments, as illustrated in FIG. 8, the communication device 700 may also include a transceiver 730, and the processor 710 may control the transceiver 730 to communicate with other devices, and specifically, to transmit information or data to other devices, or receive information or data transmitted by other devices.

The transceiver 730 may include a transmitter and a receiver. The transceiver 730 may further include antenna(s). There may be one or more antennas.

In some embodiments, the processor 710 may implement the functions of the processing unit in the verification device, or the processor 710 may implement the functions of the processing unit in the terminal device, or the processor 710 may implement the functions of the processing unit in the supervisory device, which will not be repeated here for the sake of brevity.

In some embodiments, the transceiver 730 may implement the functions of the communication unit in the terminal device, which will not be repeated here for the sake of brevity.

In some embodiments, the transceiver 730 may implement the functions of the communication unit in the verification device, which will not be repeated here for the sake of brevity.

In some embodiments, the transceiver 730 may implement the functions of the communication unit in the supervisory device, which will not be repeated here for the sake of brevity.

In some embodiments, the communication device 700 may specifically be the verification device of the embodiments of the present application, and the communication device 700 may implement the corresponding processes implemented by the verification device in various methods of the embodiments of the present application, which will not be repeated here for the sake of brevity.

In some embodiments, the communication device 700 may specifically be the terminal device of the embodiment of the present application, and the communication device 700 may implement the corresponding processes implemented by the terminal device in various methods of the embodiments of the present application, which will not be repeated here for the sake of brevity.

In some embodiments, the communication device 700 may specifically be the supervisory device of the embodiment of the present application, and the communication device 700 may implement the corresponding processes implemented by the supervisory device in various methods of the embodiments of the present application, which will not be repeated here for the sake of brevity.

FIG. 9 is a schematic structural diagram of an apparatus according to the embodiments of the present application. An apparatus 800 illustrated in FIG. 9 includes a processor 810, and the processor 810 may call a computer program from a memory and run the computer program, to implement the methods in the embodiments of the present application.

In some embodiments, as illustrated in FIG. 9, the apparatus 800 may further include a memory 820. The processor 810 may call a computer program from the memory 820 and run the computer program, to implement the methods in the embodiments of the present application.

The memory 820 may be a separate device independent from the processor 810, or may be integrated into the processor 810.

In some embodiments, the apparatus 800 may further include an input interface 830. The processor 810 may control the input interface 830 to communicate with other devices or chips, and specifically, to obtain information or data transmitted by other devices or chips. Optionally, the processor 810 may be located on-chip or off-chip.

In some embodiments, the processor 810 may implement the functions of the processing unit in the terminal device, or the processor 810 may implement the functions of the processing unit in the verification device, or the processor 810 may implement the functions of the processing unit in the supervisory device, which will not be repeated here for the sake of brevity.

In some embodiments, the input interface 830 may implement the functions of the communication unit in the terminal device, or the input interface 830 may implement the functions of the communication unit in the verification device, or the input interface 830 may implement the functions of the communication unit in the supervisory device.

In some embodiments, the apparatus 800 may further include an output interface 840. The processor 810 may control the output interface 840 to communicate with other devices or chips, and specifically, to output information or data to other devices or chips. Optionally, the processor 810 may be located on-chip or off-chip.

In some embodiments, the output interface 840 may implement the functions of the communication unit in the terminal device, or the output interface 840 may implement the functions of the communication unit in the supervisory device, or the output interface 840 may implement the functions of the communication unit in the verification device.

In some embodiments, the apparatus may be applied to the verification device in the embodiments of the present application, and the apparatus may implement the corresponding processes implemented by the verification device in various methods of the embodiments of the present application, which will not be repeated here for the sake of brevity.

In some embodiments, the apparatus may be applied to the supervisory device in the embodiments of the present application, and the apparatus may implement the corresponding processes implemented by the supervisory device in various methods in the embodiments of the present application, which will not be repeated here for the sake of brevity.

In some embodiments, the apparatus may be applied to the terminal device in the embodiments of the present application, and the apparatus may implement the corresponding processes implemented by the terminal device in various methods in the embodiments of the present application, which will not be repeated here for the sake of brevity.

In some embodiments, the apparatus mentioned in the embodiments of the present application may also be a chip. For example, the chip may be a system-level chip, a system chip, a chip system or a system-on-chip.

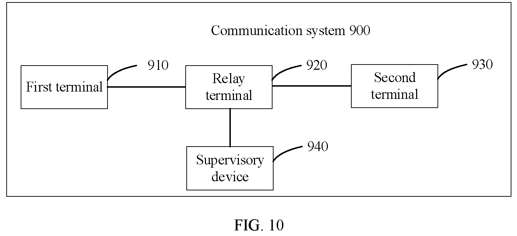

FIG. 10 is a schematic block diagram of a communication system 900 provided in the embodiments of the present application. As illustrated in FIG. 10, the communication system 900 includes a first terminal 910, a relay terminal 920, a second terminal 930 and a supervisory device 940.

The first terminal 910 may be configured to implement the corresponding functions implemented by the first terminal in the above methods, the relay terminal 920 may be configured to implement the corresponding functions implemented by the relay terminal in the above methods, and the supervisory device 940 may be configured to implement the corresponding functions implemented by the supervisory device in the above methods, which will not be repeated here for the sake of brevity.

It should be understood that the processor of the embodiments of the present application may be an integrated circuit chip with signal processing capability. In the implementation process, each step of the above method embodiments may be completed by the instructions in the form of integrated logic circuit of hardware or software in the processor. The above processors may be a general purpose processor, a digital signal processor (DSP), an application specific integrated circuit (ASIC), a field programmable gate array (FPGA), other programmable logic device, a discrete gate, a transistor logic device, or a discrete hardware component, which may implement or execute the disclosed methods, steps and logic block diagrams in the embodiments of the present application. The general purpose processor may be a microprocessor, or the processor may be any conventional processor, or the like. The steps of the methods disclosed in connection with the embodiments of the present application may be directly embodied in the execution completion of the hardware decoding processor, or by the combination of the hardware and software modules in the decoding processor. The software module may be located in a random memory, a flash memory, a read-only memory, a programmable read-only memory, an electrically erasable programmable memory, a register or other mature storage media in the art. The storage medium is located in the memory, and the processor reads the information in the memory and completes the steps of the above method in combination with its hardware.

It will be understood that the memory in the embodiments of the present application may be a volatile memory or a non-volatile memory, or may include both the volatile memory and non-volatile memory. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM), which is used as an external cache. As an example but not a limitation for illustration, many forms of the RAM are available, such as, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct Rambus random access memory (Direct Rambus RAM, DR RAM). It should be noted that the memory of the systems and methods described herein is intended to include, but is not limited to, these and any other suitable types of memories.

It should be understood that the above memory is exemplary but not limited illustration. For example, the memory in the embodiments of the present application may also be a static random access memory (static RAM, SRAM), a dynamic random access memory (dynamic RAM, DRAM), a synchronous dynamic random access memory (synchronous DRAM, SDRAM)), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct Rambus random access memory (Direct Rambus RAM, DR RAM), etc. That is, the memory in the embodiments of the present application is intended to include, but not limited to, these and any other suitable types of memories.

The embodiments of the present application also provide a computer-readable storage medium for storing a computer program.

In some embodiments, the computer-readable storage medium may be applied to the verification device in the embodiments of the present application, and the computer program enables a computer to perform the corresponding processes implemented by the verification device in various methods of the embodiments of the present application, which will not be repeated here for the sake of brevity.

In some embodiments, the computer-readable storage medium may be applied to the terminal device in the embodiments of the present application, and the computer program enables a computer to perform the corresponding processes implemented by the terminal device in various methods of the embodiments of the present application, which will not be repeated here for the sake of brevity.

In some embodiments, the computer-readable storage medium may be applied to the supervisory device in the embodiments of the present application, and the computer program enables a computer to perform the corresponding processes implemented by the supervisory device in various methods of the embodiments of the present application, which will not be repeated here for the sake of brevity.

The embodiments of the present application also provide a computer program product, and the computer program product includes computer program instructions.

In some embodiments, the computer program product may be applied to the verification device in the embodiments of the present application, and the computer program instructions enable a computer to perform the corresponding processes implemented by the verification device in various methods of the embodiments of the present application, which will not be repeated here for the sake of brevity.

In some embodiments, the computer program product may be applied to the terminal device in the embodiments of the present application, and the computer program instructions enable a computer to perform the corresponding processes implemented by the terminal device in various methods of the embodiments of the present application, which will not be repeated here for the sake of brevity.

In some embodiments, the computer program product may be applied to the supervisory device in the embodiments of the present application, and the computer program instructions enable a computer to perform the corresponding processes implemented by the supervisory device in various methods of the embodiments of the present application, which will not be repeated here for the sake of brevity.

The embodiments of the present application also provide a computer program.

In some embodiments, the computer program may be applied to the verification device in the embodiments of the present application, and the computer program, when running on a computer, causes the computer to perform the corresponding processes implemented by the verification device in various methods of the embodiments of the present application, which will not be repeated here for the sake of brevity.

In some embodiments, the computer program may be applied to the terminal device in the embodiments of the present application, and the computer program, when running on a computer, causes the computer to perform the corresponding processes implemented by the terminal device in various methods of the embodiments of the present application, which will not be repeated here for the sake of brevity.

In some embodiments, the computer program may be applied to the supervisory device in the embodiments of the present application, and the computer program, when running on a computer, causes the computer to perform the corresponding processes implemented by the supervisory device in various methods of the embodiments of the present application, which will not be repeated here for the sake of brevity.

Those of ordinary skill in the art will appreciate that the units and algorithm operations of each example described in connection with the embodiments disclosed herein may be implemented by electronic hardware, or by the combination of computer software and electronic hardware. Whether these functions are performed in hardware or software depends on the specific application and design constraints of the technical solutions. A professional technician may use different methods to implement the described functions for each specific application, but such implementation is not considered to be beyond the scope of the present application.

Those skilled in the art may clearly understand that for the convenience and brevity of the description, the specific working processes of the system, apparatus and unit described above may refer to the corresponding procedures in the embodiments of the method above, and will not be repeated herein.

In several embodiments provided according to the present application, it should be understood that the disclosed system, apparatus and method may be implemented in other ways. For example, the embodiments of the apparatus described above are only schematic, for example, the division of the unit is only a logical functional division, and there may be another division way in the actual implementation, for example, multiple units or components may be combined or integrated into another system, or some features may be ignored or not implemented. On the other aspect, the mutual coupling or direct coupling or communication connection illustrated or discussed may be indirect coupling or communication connection through some interfaces, apparatus or units, and may be electrical, mechanical or other forms.

The units described as separation parts may or may not be physically separated, and the component displayed as a unit may be or may not be a physical unit, that is, it may be located at one place, or it may be distributed to multiple network units. Some or all of the units may be selected according to actual requirements to achieve the purpose of the schemes of the embodiments.

In addition, various functional units in each embodiment of the present application may be integrated into one processing unit, various units may exist physically alone, or two or more units may be integrated into one unit.

If the function is implemented in the form of a software functional unit and is sold or used as an independent product, it can be stored in a computer readable storage medium. Based on such an understanding, the technical solutions of the present application, in essence or the part that contributes to the prior art or the part of the technical solutions, may be embodied in the form of a software product, the computer software product is stored in a storage medium, includes multiple instructions for making a computer device (which may be a personal computer, a server, a network device, etc.) to perform all or part of the steps of the method according to each embodiment of the present application. The aforementioned storage media includes a media that may store a program code, such as a U disk, a mobile hard disk, a read-only memory (ROM), a random access memory (RAM), a disk or an optical disk.

The foregoing descriptions are merely specific implementations of the present application, but the protection scope of the present application is not limited thereto. Any skilled person in the art could readily conceive of changes or replacements within the technical scope of the present application, which shall be all included in the protection scope of the present application. Therefore, the protection scope of the present application shall be subject to the protection scope of claims.

**Claims**

1. A key verification method, applied to a verification device and comprising:

receiving, by the verification device, first information;
wherein the first information comprises a key negotiation parameter of a first terminal, ciphertext information and zero-knowledge proof information; the ciphertext information is derived based on a public key of a supervisory device, a communication key determined by negotiation between the first terminal and a second terminal, and a first random number generated by the first terminal; the zero-knowledge proof information comprises first proof information and second proof information, the first proof information is determined based on the ciphertext information, the second proof information is determined based on the ciphertext information and/or the key negotiation parameter of the first terminal, the first proof information is used for verifying whether a private key of the supervisory device is capable of decrypting the ciphertext information, the second proof information is used for verifying whether a key decrypted in the ciphertext information is the communication key determined by negotiation between the first terminal and the second terminal; and the first terminal and the second terminal perform sidelink communication via a relay terminal.

2. The method according to claim 1, further comprising:

verifying, by the verification device according the first proof information, whether the private key of the supervisory device is capable of decrypting the ciphertext information;
verifying, by the verification device according to the second proof information, whether the key decrypted in the ciphertext information is the communication key determined by negotiation between the first terminal and the second terminal in a case where a verification result corresponding to the first proof information indicates that the private key of the supervisory device is capable of decrypting the ciphertext information; and
transmitting, by the verification device, the ciphertext information to the supervisory device in a case where a verification result corresponding to the second proof information indicates that the key decrypted in the ciphertext information is the communication key determined by negotiation between the first terminal and the second terminal.

3. The method according to claim 2, wherein transmitting, by the verification device, the ciphertext information to the supervisory device comprises:
transmitting, by the verification device, the ciphertext information to the supervisory device via a blockchain.

4. The method according to claim 2 or 3, wherein the verification device is the relay terminal, or the verification device is a third-party network device.

5. The method according to claim 1, further comprising:

decrypting, by the verification device, the ciphertext information according to the private key of the supervisory device;
verifying, by the verification device according to the second proof information, whether the key decrypted in the ciphertext information is the communication key determined by negotiation between the first terminal and the second terminal; and
acquiring, by the verification device, the communication key determined by negotiation between the first terminal and the second terminal in a case where a verification result corresponding to the second proof information indicates that the key decrypted in the ciphertext information is the communication key determined by negotiation between the first terminal and the second terminal.

6. The method according to claim 5, wherein receiving, by the verification device, the first information comprises:
receiving, by the verification device, the first information transmitted by the relay terminal.

7. The method according to claim 5 or 6, wherein the verification device is the supervisory device.

8. The method according to any one of claims 2 to 4, wherein verifying, by the verification device according to the first proof information, whether the private key of the supervisory device is capable of decrypting the ciphertext information comprises:
performing, by the verification device, zero-knowledge verification according to the first proof information; and in a case where a verification result is that a value of a first random number in a first portion of the ciphertext information is same as that of a first random number in a second portion of the ciphertext information, the verification result corresponding to the first proof information indicates that the private key of the supervisory device is capable of decrypting the ciphertext information.

9. The method according to any one of claims 2 to 8, wherein verifying, by the verification device according to the second proof information, whether the key decrypted in the ciphertext information is the communication key determined by negotiation between the first terminal and the second terminal comprises:
performing, by the verification device, zero-knowledge verification according to the second proof information, and in a case where a verification result is that a value of a second random number in the key decrypted in the ciphertext information is the same as that of a second random number in the key negotiation parameter of the first terminal, the verification result corresponding to the second proof information indicates that the key decrypted in the ciphertext information is the communication key determined by negotiation between the first terminal and the second terminal.

10. The method according to any one of claims 1 to 9, wherein

the communication key determined by negotiation between the first terminal and the second terminal is determined based on a second random number generated by the first terminal and a key negotiation parameter of the second terminal; and/or
the communication key determined by negotiation between the first terminal and the second terminal is determined based on a third random number generated by the second terminal and the key negotiation parameter of the first terminal.

11. The method according to claim 10, wherein

the communication key determined by negotiation between the first terminal and the second terminal is $g_0^{ab} \bmod p$;
wherein the key negotiation parameter of the first terminal is $g_0^a \bmod p$, and the key negotiation parameter of the second terminal is $g_0^b \bmod p$, a is the second random number, b is the third random number, p is a random prime number, and mod represents a modulo operation.

12. The method according to any one of claims 1 to 11, wherein

the ciphertext information is $((g_0^{ab} \bmod p)h^r, g_1^r)$;
wherein a first portion of the ciphertext information is $(g_0^{ab} \bmod p)h^r$, and a second portion of the ciphertext information is $g_1^r$; and
wherein $g_0$ and $g_1$ are both generators, a is a second random number generated by the first terminal, b is a third random number generated by the second terminal, p is a random prime number, $h=g_1^x$, r is the first random number generated by the first terminal, $g_1$ and h are both public keys of the supervisory device, x is the private key of the supervisory device, and mod represents a modulo operation.

13. A key verification method, applied to a first terminal, wherein the first terminal and a second terminal perform sidelink communication via a relay terminal and the method comprises:

transmitting, by the first terminal, first information;
wherein the first information comprises a key negotiation parameter of the first terminal, ciphertext information and zero-knowledge proof information; the ciphertext information is derived based on a public key of a supervisory device, a communication key determined by negotiation between the first terminal and the second terminal, and a first random number generated by the first terminal; the zero-knowledge proof information comprises first proof information and/or second proof information, the first proof information is determined based on the ciphertext information, the second proof information is determined based on the ciphertext information and the key negotiation parameter of the first terminal, the first proof information is used for verifying whether a private key of the supervisory device is capable of decrypting the ciphertext information, the second proof information is used for verifying whether a key decrypted in the ciphertext information is the communication key determined by negotiation between the first terminal and the second terminal.

14. The method according to claim 13, wherein the first proof information is used for verifying whether the private key of the supervisory device is capable of decrypting the ciphertext information comprises:
the first proof information is used for a verification device to perform zero-knowledge verification, and in a case where a verification result is that a value of a first random number in a first portion of the ciphertext information is same as that of a first random number in a second portion of the ciphertext information, a verification result corresponding to the first proof information indicates that the private key of the supervisory device is capable of decrypting the ciphertext information.

15. The method according to claim 13, wherein the second proof information is used for verifying whether a key decrypted in the ciphertext information is the communication key determined by negotiation between the first terminal and the second terminal comprises:

    the second proof information is used for a verification device to perform zero-knowledge verification, and in a case where a verification result is that a value of a second random number in the key decrypted in the ciphertext information is the same as that of a second random number in the key negotiation parameter of the first terminal, a verification result corresponding to the second proof information indicates that the key decrypted in the ciphertext information is the communication key determined by negotiation between the first terminal and the second terminal.

16. The method according to claim 14 or 15, wherein the verification device is the relay terminal, or the verification device is a third-party network device, or the verification device is the supervisory device.

17. The method according to any one of claims 13 to 16, wherein

    the communication key determined by negotiation between the first terminal and the second terminal is determined based on a second random number generated by the first terminal and a key negotiation parameter of the second terminal; and/or

    the communication key determined by negotiation between the first terminal and the second terminal is determined based on a third random number generated by the second terminal and the key negotiation parameter of the first terminal.

18. The method according to claim 17, wherein

    the communication key determined by negotiation between the first terminal and the second terminal is $g_0^{ab} \bmod p$;

    wherein the key negotiation parameter of the first terminal is $g_0^a \bmod p$, and the key negotiation parameter of the second terminal is $g_0^b \bmod p$, a is the second random number, b is the third random number, p is a random prime number, and mod represents a modulo operation.

19. The method according to any one of claims 13 to 18, wherein

    the ciphertext information is $((g_0^{ab} \bmod p)h^r, g_1^r)$;

    wherein a first portion of the ciphertext information is $(g_0^{ab} \bmod p)h^r$, and a second portion of the ciphertext information is $g_1^r$; and

    wherein $g_0$ and $g_1$ are both generators, a is a second random number generated by the first terminal, b is a third random number generated by the second terminal, p is a random prime number, $h=g_1^x$, r is the first random number generated by the first terminal, $g_1$ and h are both public keys of the supervisory device, x is the private key of the supervisory device, and mod represents a modulo operation.

20. A key acquisition method, applied to a supervisory device and comprising:

    receiving, by the supervisory device, ciphertext information; wherein the ciphertext information is derived based on a public key of the supervisory device, a communication key determined by negotiation between a first terminal and a second terminal, and a first random number generated by the first terminal, and the first terminal and the second terminal perform sidelink communication via a relay terminal; and

    decrypting, by the supervisory device, the ciphertext information according to a private key of the supervisory device, to obtain the communication key determined by negotiation between the first terminal and the second terminal.

21. The method according to claim 20, wherein receiving, by the supervisory device, the ciphertext information comprises:

    receiving, by the supervisory device, the ciphertext information via a blockchain.

22. The method according to claim 20 or 21, further comprising:

    receiving, by the supervisory device, confirmation information for confirming that verification based on zero-knowledge proof information is passed, wherein the zero-knowledge proof information is used for verifying whether the private key of the supervisory device is capable of decrypting the ciphertext information and verifying whether a key decrypted in the ciphertext information is the communication key determined by negotiation between the first terminal and the second terminal;

wherein decrypting, by the supervisory device, the ciphertext information according to the private key of the supervisory device comprises:

decrypting, by the supervisory device, the ciphertext information according to the private key of the supervisory device after verifying that the confirmation information is valid.

23. The method according to claim 22, wherein receiving, by the supervisory device, the confirmation information for confirming that verification based on zero-knowledge proof information is passed comprises:

receiving, by the supervisory device via a blockchain, the confirmation information for confirming that verification based on zero-knowledge proof information is passed.

24. The method according to any one of claims 20 to 23, wherein

the communication key determined by negotiation between the first terminal and the second terminal is determined based on a second random number generated by the first terminal and a key negotiation parameter of the second terminal; and/or

the communication key determined by negotiation between the first terminal and the second terminal is determined based on a third random number generated by the second terminal and the key negotiation parameter of the first terminal.

25. The method according to claim 24, wherein

the communication key determined by negotiation between the first terminal and the second terminal is $g_0^{ab} \bmod p$;

wherein the key negotiation parameter of the first terminal is $g_0^a \bmod p$, the key negotiation parameter of the second terminal is $g_0^b \bmod p$, a is the second random number, b is the third random number, p is a random prime number, and mod represents a modulo operation.

26. The method according to any one of claims 20 to 25, wherein

the ciphertext information is $((g_0^{ab} \bmod p)h^r, g_1^r)$;

wherein a first portion of the ciphertext information is $(g_0^{ab} \bmod p)h^r$, and a second portion of the ciphertext information is $g_1^r$; and

wherein $g_0$ and $g_1$ are both generators, a is a second random number generated by the first terminal, b is a third random number generated by the second terminal, p is a random prime number, $h=g_1^x$, r is the first random number generated by the first terminal, $g_1$ and h are both public keys of the supervisory device, x is the private key of the supervisory device, and mod represents a modulo operation.

27. A verification device, comprising:

a communication unit, configured to receive first information;

wherein the first information comprises a key negotiation parameter of a first terminal, ciphertext information and zero-knowledge proof information; the ciphertext information is derived based on a public key of a supervisory device, a communication key determined by negotiation between the first terminal and a second terminal, and a first random number generated by the first terminal; the zero-knowledge proof information comprises first proof information and second proof information, the first proof information is determined based on the ciphertext information, the second proof information is determined based on the ciphertext information and/or the key negotiation parameter of the first terminal, the first proof information is used for verifying whether a private key of the supervisory device is capable of decrypting the ciphertext information, the second proof information is used for verifying whether a key decrypted in the ciphertext information is the communication key determined by negotiation between the first terminal and the second terminal; and the first terminal and the second terminal perform sidelink communication via a relay terminal.

28. A terminal device, wherein the terminal device is a first terminal, the first terminal and a second terminal perform sidelink communication via a relay terminal, and the terminal device comprises:

a communication unit, configured to transmit first information;

wherein the first information comprises a key negotiation parameter of the first terminal, ciphertext information and zero-knowledge proof information; the ciphertext information is derived based on a public key of a supervisory device, a communication key determined by negotiation between the first terminal and the second terminal, and a first random number generated by the first terminal; the zero-knowledge proof information comprises first proof information and/or second proof information, the first proof information is determined based on the ciphertext information, the second proof information is determined based on the ciphertext information and the key negotiation parameter of the first terminal, the first proof information is used for verifying whether a private key of the supervisory device is capable of decrypting the ciphertext information, the second proof information is used for verifying whether a key decrypted in the ciphertext information is the communication key determined by negotiation between the first terminal and the second terminal.

29. A supervisory device, comprising:

a communication unit, configured to receive ciphertext information; wherein the ciphertext information is derived based on a public key of the supervisory device, a communication key determined by negotiation between a first terminal and a second terminal, and a first random number generated by the first terminal, and the first terminal and the second terminal perform sidelink communication via a relay terminal; and
a processing unit, configured to decrypt the ciphertext information according to a private key of the supervisory device, to obtain the communication key determined by negotiation between the first terminal and the second terminal.

30. A verification device, comprising: a processor and a memory, wherein the memory is configured to store a computer program, and the processor is configured to call the computer program stored in the memory and run the computer program, to cause the verification device to perform the method of any one of claims 1 to 12.

31. A terminal device, comprising: a processor and a memory, wherein the memory is configured to store a computer program, and the processor is configured to call the computer program stored in the memory and run the computer program, to cause the terminal device to perform the method of any one of claims 13 to 19.

32. A supervisory device, comprising: a processor and a memory, wherein the memory is configured to store a computer program, and the processor is configured to call the computer program stored in the memory and run the computer program, to cause the supervisory device to perform the method of any one of claims 20 to 26.

33. A chip, comprising: a processor, wherein the processer is configured to call a computer program from a memory and run the computer program, to cause a device equipped with the chip to perform a method of any one of claims 1 to 12, or to cause a device equipped with the chip to perform a method of any one of claims 13 to 19, or to cause a device equipped with the chip to perform a method of any one of claims 20 to 26.

34. A computer-readable storage medium, configured to store a computer program, wherein the computer program, when executed, implements the method of any one of claims 1 to 12, or implements the method of any one of claims 13 to 19, or implements the method of any one of claims 20 to 26.

35. A computer program product, comprising computer program instructions, wherein the computer program instructions, when executed, implement the method of any one of claims 1 to 12, or implement the method of any one of claims 13 to 19, or implement the method of any one of claims 20 to 26.

36. A computer program, wherein the computer program, when executed, implements the method of any one of claims 1 to 12, or implements the method of any one of claims 13 to 19, or implements the method of any one of claims 20 to 26.

## 100

FIG. 1

## 200

| Verification device | First terminal |

S210, the first terminal transmits first information; where the first information includes a key negotiation parameter of the first terminal, ciphertext information and zero-knowledge proof information; the ciphertext information is derived based on a public key of a supervisory device, a communication key determined by negotiation between the first terminal and the second terminal, and a first random number generated by the first terminal; the zero-knowledge proof information includes first proof information and/or second proof information, the first proof information is determined based on the ciphertext information, the second proof information is determined based on the ciphertext information and the key negotiation parameter of the first terminal, the first proof information is used for verifying whether a private key of the supervisory device is capable of decrypting the ciphertext information, the second proof information is used for verifying whether a key decrypted in the ciphertext information is the communication key determined by negotiation between the first terminal and the second terminal;

S220, the verification device receives a the first information.

FIG. 2

First terminal

Relay terminal

Second terminal

S11

S12

S13

S14

S15

S17

S18

S16

FIG. 3

**300**

A supervisory device receives ciphertext information; where the ciphertext information is derived based on a public key of the supervisory device, a communication key determined by negotiation between a first terminal and a second terminal, and a first random number generated by the first terminal

S310

The supervisory device decrypts the ciphertext information according to a private key of the supervisory device, to obtain the communication key determined by negotiation between the first terminal and the second terminal

S320

FIG. 4

Verification device 400

Communication unit 410

Processing unit 420

FIG. 5

Terminal device 500

Communication unit 510

FIG. 6

Supervisory device 600

Communication unit 610

Processing unit 620

FIG. 7

Communication device 700

Memory 720

Processor 710

Transceiver 730

FIG. 8

Apparatus 800

Input interface 830

Processor 810

Memory 820

Output interface 840

FIG. 9

FIG. 10

## INTERNATIONAL SEARCH REPORT

| International application No. |
|---|
| **PCT/CN2022/120646** |

| A. | CLASSIFICATION OF SUBJECT MATTER |
|---|---|

H04L9/08(2006.01)i; H04L41/00(2022.01)i; H04W12/00(2021.01)i

According to International Patent Classification (IPC) or to both national classification and IPC

| B. | FIELDS SEARCHED |
|---|---|

Minimum documentation searched (classification system followed by classification symbols)

IPC: H04L9/-, H04L41/-, H04W12/-

Documentation searched other than minimum documentation to the extent that such documents are included in the fields searched

Electronic data base consulted during the international search (name of data base and, where practicable, search terms used)

CNABS, CNTXT, CNKI, CJFD: 密钥, 验证, 监管, 监督, 侧行, 侧链, 副链, PC5, 车联网, D2D, V2X, P2P, 零知识证明, ZKP; VEN, ENTXT, 3gpp, IEEE: key, certificat+, authenticat+, supervis+, administrator, regulator, sidelink, side link, PC5, D2D, V2X, P2P, zero knowledge proof, ZKP.

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 106911513 A (NO.30 RESEARCH INSTITUTE OF CETC) 30 June 2017 (2017-06-30) description, paragraphs [0006]-[0018] | 20-21, 29, 32-36 |
| A | CN 105848140 A (XIDIAN UNIVERSITY et al.) 10 August 2016 (2016-08-10) entire document | 1-36 |
| A | WO 2021168614 A1 (HUAWEI TECHNOLOGIES CO., LTD.) 02 September 2021 (2021-09-02) entire document | 1-36 |
| A | WO 2022001278 A1 (QUALCOMM INC.) 06 January 2022 (2022-01-06) entire document | 1-36 |
| A | Benedikt Brecht et al. "A Security Credential Management System for V2X Communications" *IEEE TRANSACTIONS ON INTELLIGENT TRANSPORTATION SYSTEMS,* Vol. 19, No. 12, 31 December 2018 (2018-12-31), entire document | 1-36 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **08 June 2023** | **13 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/120646**

| Patent document cited in search report | | | Publication date (day/month/year) | Patent family member(s) | | | Publication date (day/month/year) |
|---|---|---|---|---|---|---|---|
| CN | 106911513 | A | 30 June 2017 | CN | 106911513 | B | 13 December 2019 |
| CN | 105848140 | A | 10 August 2016 | CN | 105848140 | B | 15 March 2019 |
| WO | 2021168614 | A1 | 02 September 2021 | EP | 4087180 | A1 | 09 November 2022 |
| | | | | EP | 4087180 | A4 | 04 January 2023 |
| | | | | CN | 112602289 | A | 02 April 2021 |
| | | | | CN | 112602289 | B | 21 December 2021 |
| WO | 2022001278 | A1 | 06 January 2022 | WO | 2022000416 | A1 | 06 January 2022 |
| | | | | TW | 202203673 | A | 16 January 2022 |
| | | | | EP | 4176597 | A1 | 10 May 2023 |
| | | | | KR | 20230034965 | A | 10 March 2023 |
| | | | | BR | 112022026189 | A2 | 17 January 2023 |
| | | | | IN | 202227060795 | A | 02 December 2022 |

Form PCT/ISA/210 (patent family annex) (July 2022)